# FASCICULE DE BREVET EUROPEEN

(11) **EP 3 540 875 B1**
(45) Date de publication et mention de la délivrance du brevet: **17.02.2021**
(21) Numéro de dépôt: 19161415.5
(22) Date de dépôt: 07.03.2019
(51) Int. Cl.: H01R 43/20, G01B 11/00, G01B 11/24, B23P 21/00

(54) **DISPOSITIF ET PROCÉDÉ D'INSERTION COMPRENANT DES MOYENS D'ALIGNEMENT DE L'AXE LONGITUDINAL DE LA COSSE**
EINFÜGEVORRICHTUNG UND -VERFAHREN, DIE MITTEL ZUR AUSRICHTUNG DER LÄNGSACHSE DES KABELSCHUHS UMFASSEN
INSERTION DEVICE AND METHOD COMPRISING MEANS FOR ALIGNMENT OF THE LONGITUDINAL AXIS OF THE LUG

(30) Priorité: 16.03.2018 FR 1852285
(43) Date de publication de la demande: 18.09.2019
(73) Titulaire: CEMRA, 13120 Gardanne (FR)
(72) Inventeur: CELOUDOUX, Jean-Paul, 13100 AIX EN PROVENCE (FR); DECROUX, Christian, 74200 ARMOY (FR); MALET, Yves, 13127 VITROLLES (FR); RICHARD, Jean-Yves, 13100 AIX EN PROVENCE (FR)
(74) Mandataire: LLR

(56) Documents cités:
- EP-A1- 2 958 201
- DE-A1-102016 101 681
- US-A- 5 157 830
- US-A1- 2016 064 888

## Description

L'invention s'intéresse au domaine de la fabrication des faisceaux électriques formés d'une pluralité de câbles dont les extrémités sont insérées dans des connecteurs.

Des machines spéciales, conçues à cet effet, sont largement utilisées pour fabriquer des faisceaux électriques à destination de l'industrie automobile, de l'industrie aéronautique ou encore de l'industrie de l'électroménager.

Ces machines comprennent une partie amont dans laquelle un câble est coupé à une longueur désirée. Les deux extrémités du câble sont dénudées et généralement serties d'une cosse pour former une terminaison destinée à établir un contact électrique.

Les câbles sont alors transférés dans une partie aval comprenant un dispositif d'insertion où sont disposés des connecteurs ou des composants électriques comprenant des bornes ou des alvéoles dans lesquelles les cosses sont insérées selon des dispositions précises.

A titre d'exemple, des machines de ce type sont décrites dans la publication FR 2 678 136, ou encore dans la publication 2 721 445.

Les déplacements des câbles d'un poste à un autre sont assurés par des pinces animées en mouvement et saisissant le câble en un point de saisie proche de la cosse. Une unité centrale, dans laquelle sont enregistrées les positions relatives des câbles et des alvéoles des connecteurs, pilote les mouvements de transfert selon une séquence préétablie jusqu'à l'insertion de la cosse dans l'alvéole.

Ces unités d'insertion comportent un poste permettant de positionner la cosse dans un repère lié à la machine de manière à orienter la position angulaire de la cosse autour de l'axe de l'alvéole confondu avec l'axe d'insertion.

La publication EP 1 304 773 décrit un dispositif et un procédé de positionnement dans lequel la cosse est placée dans une unité de détection entrainée incrémentalement en rotation et mesurant la largeur de l'ombre formée par la cosse dans un rideau lumineux. La position angulaire de la cosse est corrigée en fonction d'une position angulaire de l'unité de détection. Toutefois, ce dispositif prévoit de corriger la position angulaire de la cosse en faisant tourner la pince autour d'un axe correspondant à l'axe du câble au point de saisie. Il en résulte que, lorsque la portion de câble située entre la cosse et le point de saisie présente un léger coude, la cosse est alors orientée selon un axe qui n'est pas parallèle à l'axe d'insertion. En effet, lorsque la cosse est mise en rotation autour de l'axe du câble au point de saisie, la cosse décrit un mouvement conique ne permettant pas d'obtenir un alignement précis de la cosse avec l'axe d'insertion.

La publication EP 3 021 430, décrit un dispositif de positionnement permettant de corriger ce phénomène et propose d'utiliser des paires de pinces présentant des débattements selon des axes différents. Les paires de pinces saisissent simultanément la cosse et le câble ce qui permet, par des saisies successives, d'aligner le câble et la cosse dans le repère de l'alvéole. Toutefois, ce dispositif prévoit de mettre la cosse en contact avec les parties métalliques des pinces de positionnement, au risque de provoquer une dégradation de la cosse elle-même. Ceci exclut l'usage de ce dispositif pour la réalisation de faisceaux de câbles destinés au marché automobile ou aéronautique.

La publication US 2016 064 888 décrit un dispositif d'insertion utilisant un robot 6 axes et une méthode d'insertion dans laquelle on mesure la position de l'extrémité de la cosse. Le dispositif évalue alors les déviations angulaires de la cosse autour de l'axe d'insertion ainsi que les déviations angulaires autour des deux directions perpendiculaires à la direction d'insertion d'un axe assimilé à la direction de l'extrémité du câble et passant par le point de saisie du fil et par l'extrémité de la cosse. Après avoir corrigé la position angulaire de la cosse autour de l'axe d'insertion, la cosse est mise en appui sur un bord de l'ouverture de l'alvéole de sorte que les mouvements de la cosse sont bloqués en translation autour des directions perpendiculaires à la direction d'insertion. Dans cette configuration, il est prévu d'aligner la pince avec l'axe d'insertion en faisant tourner la pince autour du point fixe formé par l'extrémité de la cosse en appui sur le bord de l'alvéole. Ce procédé présente l'inconvénient de détériorer l'extrémité de la cosse en raison des frottements entre l'extrémité de la cosse et le bord de l'ouverture de l'alvéole.

L'invention, qui propose un procédé et un dispositif d'insertion dans une alvéole d'un connecteur d'une cosse sertie à l'extrémité d'un câble, a pour objet d'apporter une solution originale aux inconvénients évoqués ci-dessus.

Le procédé selon l'invention se caractérise en ce qu'on exécute les étapes suivantes :
- Etape A : à l'aide d'une pince d'insertion montée sur un robot apte à déplacer ladite pince d'insertion en translation dans trois directions indépendantes et en rotation autour de ces trois directions, on saisit le câble en un point de saisie proche de la cosse, et on positionne la pince de sorte que, au point de saisie, le câble est sensiblement tangent à une direction d'insertion de la cosse dans l'alvéole dans un repère donné,
- Etape B : on fait avancer la pince selon la direction d'insertion de manière à présenter la cosse dans le champ d'une première caméra et d'une deuxième caméra dont les champs de vision sont orientés selon deux axes orthogonaux situés dans un plan perpendiculaire à la direction d'insertion,
- Etape C : à l'aide des images formées par chacune des caméras dans des plans ou sur des axes perpendiculaires à l'axe de chacun des champs de vision desdites caméras, on détermine la position dans le repère d'un axe longitudinal de la cosse,
- Etape D : à l'aide du robot, on déplace la pince d'insertion de manière à confondre l'axe longitudinal de la cosse avec l'axe d'insertion de la cosse dans l'alvéole.

L'analyse des images formées par les caméras permet de déterminer dans l'espace tridimensionnel du dispositif l'orientation d'un axe colinéaire avec l'axe longitudinal de la cosse. Il est alors possible, à l'aide du robot de type 6 axes, de réorienter l'axe longitudinal de la cosse en déplaçant le point de saisie de manière à aligner l'axe longitudinal de la cosse avec l'axe de l'alvéole. Cet alignement se fait sans qu'il soit nécessaire de mettre un quelconque élément mécanique au contact de la cosse elle-même.

Il en résulte, comme on le verra par la suite, qu'il devient alors possible d'aligner la cosse autour de l'axe d'insertion en faisant tourner la cosse autour de son axe longitudinal et non pas autour de l'axe du câble au point de saisie ou encore autour d'un axe passant par le point de saisie et l'extrémité de la cosse. Au cours de cette rotation la cosse est alors parfaitement centrée autour de son axe et ne décrit pas une trajectoire conique.

Le procédé selon l'invention peut aussi comprendre isolément, ou en combinaison, les caractéristiques suivantes :
- A l'étape D, on procède aux opérations suivantes
   ∘ on effectue des rotations de la pince d'insertion autour d'axes passant par le point de saisie et parallèles aux axes des champs de vision de manière à rendre l'axe longitudinal de la cosse parallèle à la direction d'insertion,
   ∘ on translate la pince d'insertion selon les axes orthogonaux perpendiculaires à la direction d'insertion en conservant l'axe longitudinal de la cosse parallèle à l'axe d'insertion, de manière à confondre l'axe longitudinal de la cosse avec l'axe d'insertion.
- La première et la deuxième caméra sont des caméras de champ permettant d'obtenir une image bidimensionnelle de la projection de la cosse dans un plan perpendiculaire à l'axe du champ de chacune des caméras et dans lequel, à l'étape C, on procède aux opérations suivantes :
   ∘ pour chacune des images, on détermine un angle formé par une droite parallèle ou confondue à l'axe longitudinal de la cosse et identifiable sur l'image de la cosse par rapport à une droite parallèle à la direction d'insertion et située dans ledit plan de projection,
   ∘ on détermine l'orientation de l'axe longitudinal de la cosse en additionnant deux rotations autour des axes du champ de vision de chacune des caméras d'une valeur correspondant à chacun de ces angle de déviation.
- A l'issue de l'étape D, et au cours d'une étape E, à l'aide d'une des caméras de champ on mesure une ou plusieurs distances caractéristiques entre des points prédéterminés du contour de la cosse et, à l'aide du robot, on fait tourner la pince d'insertion autour de l'axe d'insertion jusqu'à ce que les valeurs de ces distances soient égales à des valeurs prédéterminées correspondant à une position angulaire connue de la cosse autour de son axe longitudinal, et on ajuste la position angulaire de la cosse autour de la direction d'insertion par rapport à la position angulaire de l'alvéole.
- La première et la deuxième caméra sont des caméras linéaires associées à un rideau lumineux et permettant chacune d'engendrer sur une droite parallèle à la direction des capteurs de chaque caméra l'image de segments représentatifs de la largeur ou de la longueur d'une section de la cosse, et dans lequel, à l'étape C, on procède aux opérations suivantes :
   ∘ on fait avancer la pince d'insertion selon la direction d'insertion de manière à présenter une première section de la cosse dans le rideau lumineux, et on détermine des coordonnées dans le repère orthonormé d'un point placé sur l'axe longitudinal de la cosse,
   ∘ on fait de nouveau avancer la pince d'insertion selon la direction d'insertion de manière à présenter dans le rideau lumineux une deuxième section de la cosse, distincte de la première section, et on détermine des coordonnées dans le repère orthonormé d'un point placé sur l'axe longitudinal de la cosse,
   ∘ on détermine l'orientation de l'axe longitudinal de la cosse passant par ces deux points.
- A l'issue de l'étape D, et au cours d'une étape E', à l'aide du robot, on fait tourner la pince d'insertion autour de l'axe d'insertion, et on ajuste la position angulaire finale de la cosse autour de la direction d'insertion par rapport à la position angulaire de l'alvéole en recherchant des valeurs maximales ou minimales des deux segments représentatifs de la largeur ou de la longueur d'une section de la cosse (83a, 84a).
- Postérieurement à l'étape E ou E', on exécute une étape F au cours de laquelle, à l'aide du robot, on positionne la cosse en face de l'alvéole du connecteur et on introduit la cosse dans l'alvéole en déplaçant, la pince d'insertion selon la direction d'insertion.
- Postérieurement à l'étape E ou E', on exécute les étapes suivantes :
   ∘ Etape G : on insère partiellement la cosse dans l'alvéole sur une profondeur prédéterminée et non nulle, en translatant la pince d'insertion le long de l'axe d'insertion, de sorte que, à l'issue de cette étape, la cosse est bloquée en rotation autour des axes, et en translation autour des axes perpendiculaires à l'axe d'insertion et reste libre de se déplacer en translation le long de l'axe d'insertion.
   ∘ Etape H : on translate la pince d'insertion au point de saisie selon les axes perpendiculaire à l'axe d'insertion d'une valeur égale et de signe opposé aux valeurs des translations opérées à l'étape D, et on fait tourner la pince autour des axes orthogonaux perpendiculaires à la direction d'insertion d'une valeur angulaire égale et de signe opposé aux valeurs angulaires des rotations opérées à l'étape D, de manière à aligner l'axe du fil au point de saisie sur l'axe d'insertion,
   ∘ Etape I : on insère complètement la cosse dans l'alvéole en déplaçant la pince d'insertion selon la direction d'insertion.
- Au cours de l'étape F ou de l'étape I, on mesure à l'aide d'une jauge de contrainte une force d'introduction de la cosse dans l'alvéole et on émet une alerte lorsque ladite force d'introduction est supérieure à des seuils prédéterminés en fonction de la profondeur d'introduction.
- Préalablement à l'étape A, on prépositionne la cosse autour de la direction d'insertion en exécutant les étapes au cours desquelles :
   ∘ à l'aide d'une pince de prépositionnement apte à faire tourner un câble autour de l'axe du câble, on saisit le câble en un point de saisie proche de la cosse de sorte que, au point de saisie, le câble est sensiblement tangent à la direction d'insertion,
   ∘ on positionne la cosse dans le champ d'une caméra de champ de prépositionnement de manière à obtenir une image d'un contour de la cosse,
   ∘ on mesure une ou plusieurs distances caractéristiques entre des points prédéterminés du contour de la cosse et,, on actionne la pince de prépositionnement (5) de manière à faire tourner le câble autour de son axe au point de saisie par la pince de prépositionnement jusqu'à ce que la valeur de ces distances soient comprises dans un intervalle de valeurs prédéterminées correspondant à une position angulaire connue de la cosse autour de son axe.
   ∘ on fait tourner le câble selon un sens de rotation prédéterminé d'un angle supérieur à la valeur angulaire de cet intervalle, de sorte que, au cours de l'étape E ou E', on fait tourner la cosse autour de l'axe d'insertion selon un sens de rotation inverse audit sens de rotation prédéterminé.

L'invention comprend également un dispositif pour mettre en œuvre le procédé. Ce dispositif se caractérise en ce qu'il comprend :
- une pince d'insertion fixée sur la tête d'un robot d'insertion apte à déplacer ladite pince d'insertion en translation dans trois directions indépendantes et en rotation autour de ces trois directions,
- une première caméra et une deuxième caméra dont les champs de vision sont orientés selon deux axes orthogonaux situés dans un plan perpendiculaire à la direction d'insertion,
- une unité centrale reliée au robot et aux caméras comprenant des instructions codées pour analyser les images provenant des caméras et piloter les mouvements de la pince d'insertion selon l'une quelconque des étapes du procédé.

L'utilisation d'un robot six axes permet de repositionner l'axe de la cosse dans toutes les directions, de procéder à la rotation de la cosse autour de cet axe et d'introduire la cosse dans l'alvéole en saisissant le câble une seule fois. Cet avantage technique s'avère particulièrement bien adapté en la circonstance, en ce qu'il permet de réaliser toutes ces opérations sans contact mécanique avec la cosse et sans qu'il soit nécessaire de transférer le câble d'une pince à une autre.

Le dispositif selon l'invention peut aussi comprendre isolément, ou en combinaison, les caractéristiques suivantes :
- La première et la deuxième caméra sont des caméras de champ permettant d'obtenir une image bidimensionnelle de la cosse dans un plan perpendiculaire au champ de ladite caméra.
- La première et la seconde caméra sont des caméras linéaires collaborant avec des émetteurs de lumière formant un rideau lumineux perpendiculaire à la direction d'insertion, et permettant d'engendrer sur une droite parallèle à la direction des capteurs de la caméra l'image de segments représentatifs de la largeur ou de la longueur d'une section de la cosse.
- La tête du robot est mobile en rotation autour d'un axe et supporte deux pinces d'insertion, de sorte que le robot peut saisir simultanément les deux extrémités d'un même câble.
- Le dispositif comporte des moyens de prépositionnement comprenant :
   ∘ une caméra de prépositionnement apte à former une image bidimensionnelle de la cosse dans un plan perpendiculaire à l'axe du champ de la caméra de prépositionnement, et à déterminer des valeurs de distances caractéristiques entre des points prédéterminés du contour de la cosse,
   ∘ une pince de prépositionnement comprenant deux branches mobiles l'une par rapport à l'autre selon deux directions opposées contenues dans un plan perpendiculaire à l'axe du câble au point de saisie, de sorte que, en déplaçant les branches de la pince de prépositionnement dans des directions opposées, on fait tourner le câble autour de son axe au point de saisie.

L'invention sera mieux comprise à la lecture de la description et des figures annexées, qui sont fournies à titre d'exemples et ne présentent aucun caractère limitatif, dans lesquelles :
- La figure 1 est une vue schématique en perspective d'une pince d'insertion tenant un câble dont la cosse présente un axe longitudinal qui n'est pas aligné avec la direction d'insertion.
- La figure 2 est une vue schématique en perspective du robot 6 axes.
- La figure 3 est une vue schématique en perspective des images formées par les caméras de champ au cours des étapes B et C selon un premier mode de réalisation de l'invention.
- Les figures 4 et 5 sont des vues schématiques de l'image de cosses usuellement utilisées.
- La figure 6 est une vue schématique en perspective illustrant l'étape D au cours de laquelle on aligne la cosse avec l'axe d'insertion.
- La figure 7 est une vue schématique en perspective illustrant l'étape D au cours de laquelle on translate la cosse pour confondre l'axe longitudinal LL' avec l'axe d'insertion XX'.
- La figure 8 est une vue schématique en perspective illustrant l'étape E ou E', au cours de laquelle on aligne la cosse autour de l'axe d'insertion.
- La figure 9 est une vue schématique en perspective de la cosse avant son introduction dans une alvéole.
- La figure 10 est une vue schématique en perspective de la cosse après son introduction dans l'alvéole selon un première option de mise en œuvre de l'invention.
- La figure 11 est une vue schématique de la cosse après son introduction partielle dans l'alvéole selon une deuxième option de mise en œuvre de l'invention.
- La figure 12 est une vue schématique, selon la deuxième option de mise en œuvre de l'invention, de la pince de saisie après l'opération de réalignement.
- La figure 13 est une vue schématique, selon la deuxième option de mise en oeuvre de l'invention, après insertion de la cosse dans l'alvéole.
- La figure 14 est une vue schématique en perspective d'une unité de stockage temporaire.
- Les figures 15, 16, 16a, 16b, 17, 17a et 17b, sont des vues schématiques en perspective illustrant les étapes d'un second mode de réalisation de l'invention.
- Les figures 18 et 19 sont des vues schématiques en perspective illustrant les étapes de prépositionnement de la cosse autour de l'axe du câble.
- Les figures 20 et 21 illustrent une variante d'exécution de l'invention.

Dans ce qui suit, il sera fait référence au repère orthonormé principal dans lequel se situe le dispositif d'insertion. Les coordonnées, la direction d'insertion et les orientations angulaires de chacune des alvéoles, ainsi que la position de chacun des connecteurs, de chacune des caméras et de l'orientation des champs de vision des caméras sont connues à chaque instant dans ce repère. Pendant l'exécution d'un cycle de positionnement et d'insertion, les positions de ces éléments sont fixes dans le repère principal.

De même, les coordonnées et l'orientation de la pince d'insertion tenant le câble sont également connues au cours et à l'issue de chaque mouvement du robot.

Par convention, l'axe OX ou XX' représente la direction d'insertion de la cosse dans l'alvéole du connecteur dans laquelle on désire introduire la cosse. Dans un plan perpendiculaire à la direction OX, la direction OZ, ou ZZ', représente la direction verticale et la direction OY, ou YY', représente la direction transversale. Les directions OY et OZ sont perpendiculaires entre elles. On observe ici que, dans le repère principal du dispositif d'insertion, le repère OXYZ change à chaque changement d'alvéole.

Il est alors possible de concevoir qu'un ou plusieurs éléments du dispositif puissent être disposés dans un sous-repère qui leur est propre et dont les coordonnées sont connues par rapport au repère principal de la machine et par rapport au repère OXYZ de l'alvéole à équiper. Le passage d'un sous-repère au repère principal du dispositif ou au repère OXYZ de l'alvéole se fait alors par un simple changement de repère.

En préambule aux opérations d'insertion proprement dites, il est considéré ici que les opérations de sertissage de la cosse considérée comme rigide et non déformable sur l'extrémité du câble, considéré comme pouvant subir des déformations, sont réalisées en amont du dispositif d'insertion.

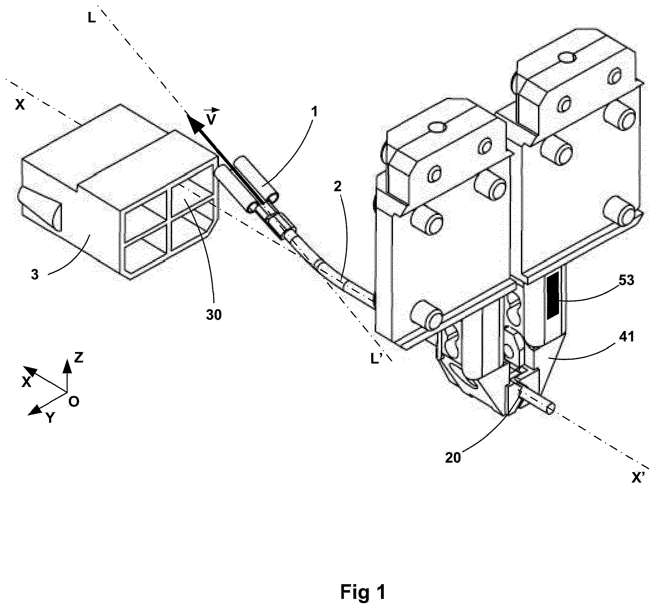

Aussi, à la première **étape A** du procédé et en référence à la figure 1, il convient à l'aide d'une pince d'insertion 41 montée sur un robot, de saisir le câble 2, tenu par une pince sur un dispositif de stockage intermédiaire, en un point de saisie 20 proche de la cosse 1. Lorsque le câble 2 est saisi par la pince d'insertion 41, l'axe du câble au niveau du point de saisie 20 est aligné avec l'axe de la pince matérialisé par l'axe XX' aligné ici avec l'axe d'insertion de l'alvéole 30. La pince d'insertion 41 comprend une jauge de contrainte 53 permettant d'évaluer la force d'insertion appliquée sur le fil 2 dans la direction d'insertion.

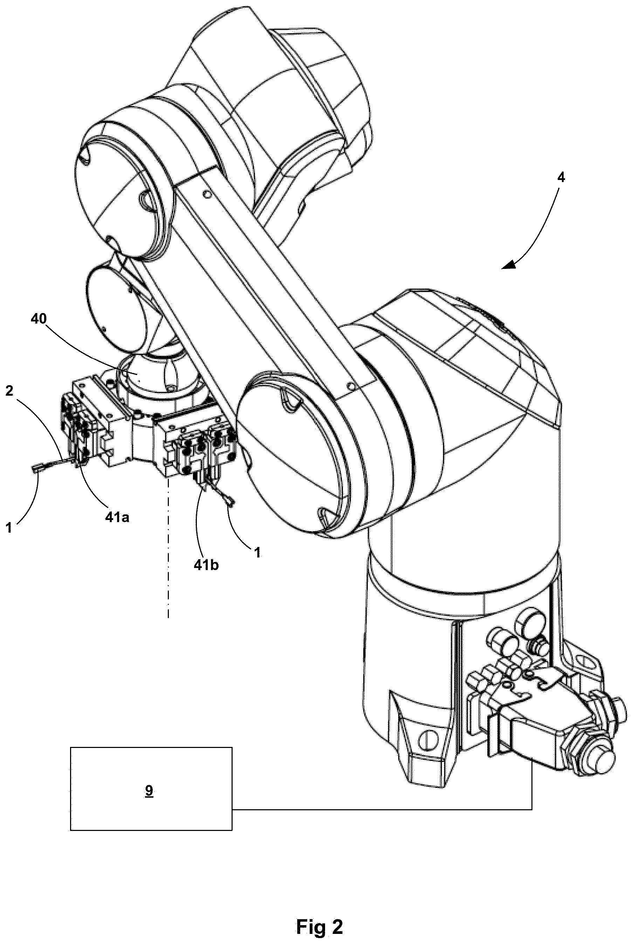

La figure 2 permet de visualiser le robot six axes 4 supportant une tête 40 sur laquelle sont fixées deux pinces d'insertion 41. La tête 40 est rotative autour d'un axe du robot, ce qui permet de saisir simultanément les deux extrémités d'un même câble 2. Le robot est relié à une unité centrale de pilotage 9 pour piloter les mouvements du robot et de la pince d'insertion 41. Le robot permet de translater la pince d'insertion 41 dans chacune des directions du repère OXYZ et de mettre en rotation la pince autour de chacun de ces axes ou d'un axe quelconque du repère OXYZ.

Compte tenu de ce qui précède, la position de la pince 41, ainsi que la position et l'orientation du câble au point de saisie 20, sont donc connues à chaque instant dans le repère du dispositif ou dans le repère de l'alvéole.

Pour assurer la précision des opérations d'alignement et d'insertion, des étapes de calibrage du robot et des caméras sont réalisées à fréquence régulière, de manière à s'assurer que les positions dans le repère principal et dans le repère OXYZ restent précises et fidèles.

A l'aide du robot, on positionne la pince d'insertion 41 de sorte que, au point de saisie 20, le câble 2 est sensiblement tangent à la direction d'insertion XX' de la cosse dans l'alvéole 30 d'un connecteur 3. On observe alors que la cosse 1 est orientée selon un vecteur V dont la direction LL' n'est pas alignée sur la direction d'insertion XX'. De plus, la position angulaire de la cosse autour de l'axe XX' ne correspond pas nécessairement avec l'orientation angulaire de l'alvéole autour de cet axe.

L'axe longitudinal LL' de la cosse est défini comme un axe s'étendant selon la direction principale de la cosse, passant généralement par le centre du fil au niveau de la zone de sertissage du fil 2 sur la cosse 1. Cet axe longitudinal forme un axe de symétrie de la cosse. Lorsque la cosse 1 est introduite dans une alvéole 30, l'axe longitudinal LL' de la cosse est confondu avec l'axe d'insertion de l'alvéole.

On observera ici que le coude formé par l'extrémité du fil est l'addition de la courbure du fil entre la pince d'insertion et la cosse et d'un angle non nul formé par la cosse avec le fil au niveau du point de sertissage de la cosse sur le fil.

Les étapes du procédé ont pour objet de corriger ces déviations.

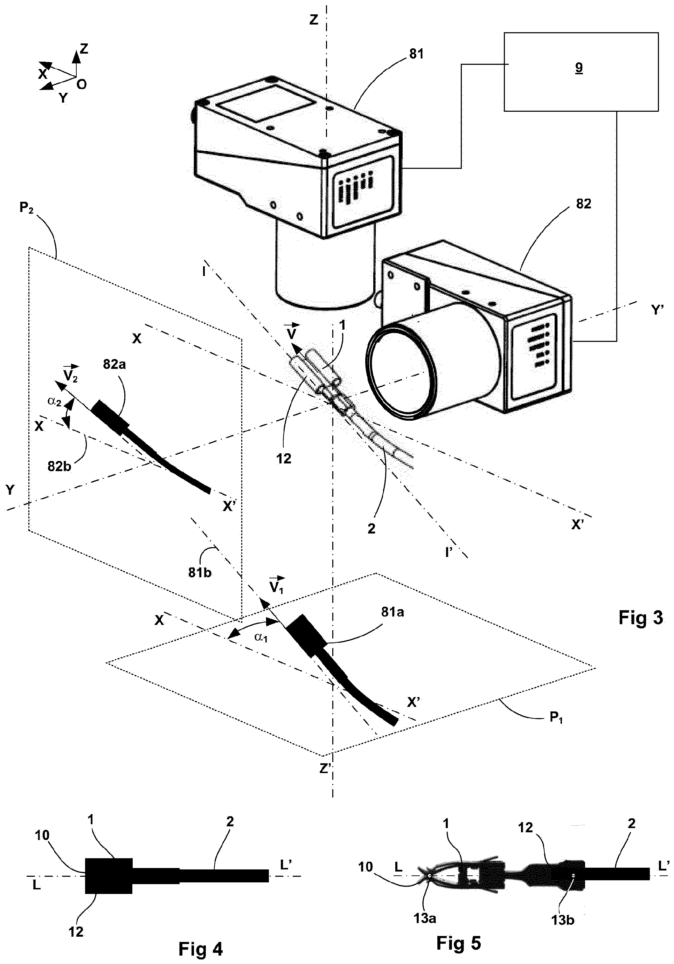

Selon un premier mode de réalisation de l'invention, au cours de **l'étape B**, illustrée à la figure 3, on place la cosse 1 dans le champ d'une première caméra 81 et d'une deuxième caméra 82. Les axes des champs de vision YY' et ZZ' des caméras 81 et 82 sont perpendiculaires entre eux et situés dans un plan perpendiculaire à la direction d'insertion XX'. Les caméras sont fixes dans le repère OXYZ.

Dans l'exemple de réalisation illustré à la figure 3, les caméras 81 et 82 sont des caméras de champ permettant d'obtenir une image bidimensionnelle de la cosse 1.

A titre d'exemple, une caméra de type VeriSens™ Série XF700 fournie par la Sté Baumer permet de réaliser toutes les opérations de visualisation et de reconnaissance de forme qui seront décrites par la suite.

Dans un plan P₁ perpendiculaire au champ de vision ZZ' de la première caméra 81, on obtient une image 81a de la cosse 1.

L'analyse du contour de l'image permet de définir des points caractéristiques de ce contour dont l'alignement est représentatif de l'alignement de l'axe longitudinal LL' de la cosse. A titre d'exemple, dans le cas illustré à la figure 3, la ligne II' passant par le bord extérieur gauche 12 de la cosse 1 est parallèle à l'axe longitudinal LL' de la cosse.

Lorsque l'axe longitudinal LL' de la cosse 1 n'est pas aligné avec la portion de fil située entre le point de saisie 20 et la cosse 1, la projection 81b de cette ligne II' dans le plan P₁ est orientée selon une direction V₁ faisant un angle de déviation α₁ avec la direction d'insertion XX' dont la projection dans le plan P₁ est également repérée par les mêmes lettres XX'.

De manière analogue, dans un plan P₂ perpendiculaire au champ de vision YY' de la deuxième caméra 82, on obtient une image 82a de la cosse 1. La ligne 82b, représentative de la projection du bord de la cosse dans le plan P₂ est orientée selon une direction V₂ faisant un angle de déviation α₂ avec la direction d'insertion XX' repérée par les mêmes lettres dans le plan P₂.

On détermine alors à **l'étape C**, l'orientation de l'axe longitudinal LL' de la cosse qui est donnée par un vecteur V dans le repère OXYZ et qui est l'addition des vecteurs V₁ et V₂. Cette orientation est également l'addition d'une rotation de valeur α₁ autour de l'axe ZZ' avec une rotation de valeur α₂ autour de l'axe YY'.

On observera ici que la cosse 1 n'a pas toujours un profil aussi simple que celui de la cosse illustrée dans les figures servant de support à la présente description et représentée en vue de dessus à la figure 4.

La figure 5 illustre, à titre d'exemple, une cosse présentant un profil plus complexe. Il est alors nécessaire d'analyser plus en détail le profil de la cosse pour identifier des points remarquables, visibles par chacune des caméras et dont l'alignement est représentatif de l'alignement de la cosse. Dans le cas de la cosse illustrée à la figure 5 l'analyse du contour de l'image pourra facilement identifier un bord 12 ou encore des points 13a et 13b, alignés avec la direction longitudinale de la cosse, et disposés sur des portions de la cosse facilement identifiables. On notera ici que ces paires de points ou ces lignes peuvent être différentes pour chacune des caméras.

Aussi, l'utilisation d'une caméra de champ permettant d'analyser le contour de l'image autorise la mise en oeuvre d'une grande variété de cosses de formes distinctes et complexes.

Les instructions codées permettant de réaliser l'analyse de l'image peuvent être stockées dans l'unité centrale 9 ou dans la caméra elle-même. Par extension, on considérera ici que les instructions codées stockées dans la mémoire de la caméra sont assimilées aux instructions codées stockées dans la mémoire de l'unité centrale 9.

Le modèle de caméra cité plus haut permet de définir des contours, d'identifier des points remarquables ou des bords, de calculer des distances entre ces points remarquables, de déterminer des angles entre des lignes du contour et une direction donnée, d'identifier l'alignement de l'image sur un profil prédéterminé. Ce modèle de caméra offre ainsi une grande variété de choix de paramètres permettant d'identifier l'axe longitudinal de la cosse et, comme on le verra plus loin, de procéder à l'orientation de la cosse autour de l'axe d'insertion.

**A l'étape D**, pour confondre l'axe longitudinal LL' de la cosse avec la direction d'insertion X'X il convient de réaliser, à l'aide du robot 4, deux déplacements successifs de la pince.

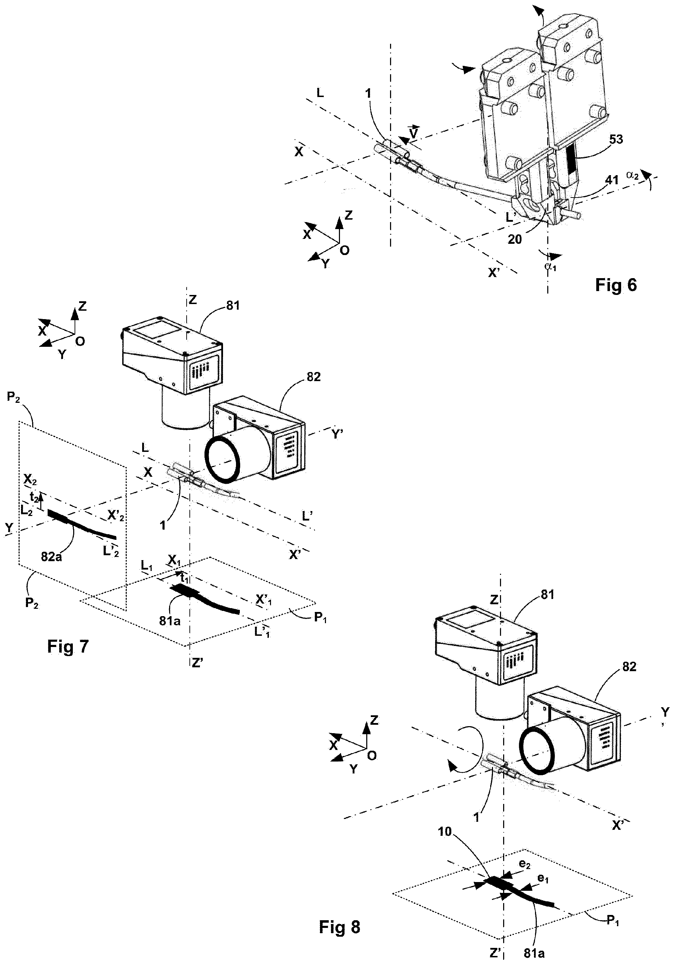

Un premier déplacement consiste à effectuer deux rotations de sens opposées aux angles de déviation α₁ et α₂, autour de deux axes passant par le point de saisie 20 et parallèles aux axes ZZ' et YY', comme cela est illustré à la figure 6. Le vecteur V est alors aligné avec la direction d'insertion XX'. L'axe LL' est parallèle à la direction XX'.

On observe alors, comme cela est illustré à la figure 6, que le point de saisie 20, n'est plus positionné sur l'axe XX', et que la direction du câble au niveau du point de saisie 20 par la pince d'insertion 41 n'est plus alignée avec la direction d'insertion XX'.

Le deuxième déplacement consiste, après avoir placé l'axe longitudinal LL' de sorte qu'il soit parallèle à la direction XX', à translater la cosse en conservant l'axe LL' parallèle à l'axe XX' de manière à confondre ces deux axes LL' et XX'. Pour ce faire, l'analyse des images 81a et 82a permet de déterminer l'axe de symétrie de la cosse dans chacun des plans P₁ et P₂, respectivement L₁L'₁ et L₂L'₂, correspondant à la projection de l'axe LL' dans chacun de ces plans. Connaissant la position de l'axe XX' et ses projections, respectivement X₁X'₁ et X₂X'₂, dans les plans P₁ et P₂ on en déduit les valeurs t₁ et t₂ des translations à effectuer respectivement dans les directions YY' et ZZ' comme cela est illustré à la figure 7.

A l'issue de ces deux rotations et de ces deux translations, l'axe longitudinal LL' de la cosse 1 est alors confondu avec l'axe d'insertion XX' de la cosse dans l'alvéole 30.

La figure 8 illustre une **étape E**, au cours de laquelle, après avoir exécuté les étapes A à D, on oriente la cosse autour de l'axe d'insertion XX'. La cosse tourne alors autour de son axe LL', confondu avec l'axe d'insertion XX' et ne décrit plus un cône dans l'espace. En d'autres termes, c'est le point de saisie 20 de la pince d'insertion qui décrit un cercle sur un cône dont l'axe est formé par la direction d'insertion XX'.

Pour exécuter cette opération, une seule caméra de champ est alors nécessaire.

A l'aide du robot 6, on fait tourner la cosse autour de l'axe d'insertion XX' et on recherche la position angulaire pour laquelle l'image formée par la projection de la cosse dans le plan perpendiculaire à l'axe du champ de vision de la caméra (ici, l'image 81a située dans le plan P₁ perpendiculaire au champ de vision de la première caméra 81) a une position optimale par rapport à une une image prédéterminée du profil de la cosse, lorsque la cosse est dans une position angulaire alignée avec la position angulaire de l'alvéole.

A titre d'exemple, la figure 8 illustre une possibilité d'optimisation alternative permettant de s'affranchir des variations géométriques de la cosse dans des limites de tolérances prédéterminées, dans laquelle on identifie des distances e₁ et e₂ entre des points remarquables du contour, et on fait tourner la cosse autour de l'axe d'insertion XX' correspondant alors à l'axe longitudinal LL' de la cosse 1, jusqu'à ce que les valeurs de ces distances atteignent un maximum ou un minimum . Il suffit alors d'aligner la position angulaire de la cosse 1 sur la position angulaire de l'alvéole 30.

Au cours de cette étape, on évalue également la position sur l'axe XX' de l'extrémité avant 10 de la cosse 1.

A l'issue de l'étape E on connait de manière précise la position de la cosse dans le repère OXYZ ou dans le repère du dispositif.

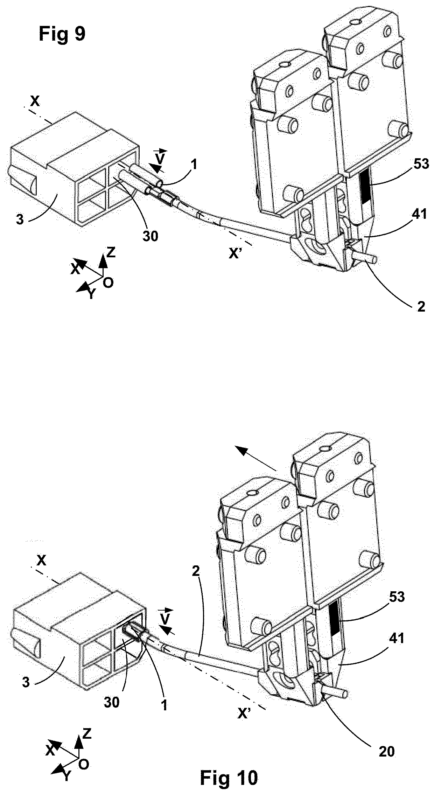

Le robot peut alors présenter la cosse devant l'alvéole du connecteur 30, comme cela est illustré à la figure 9.

Selon une première option de mise en œuvre de l'invention on peut décider au cours d'une **étape F**, d'introduire la cosse dans l'alvéole en déplaçant la pince d'insertion 41, selon la direction d'insertion XX', d'une valeur prédéterminée en fonction de la profondeur de l'alvéole 30, comme cela est illustré à la figure 10. Cette opération est facilitée par le fait que la cosse est alors parfaitement alignée avec la direction d'insertion XX'.

Au cours de l'étape F, on mesure, à l'aide de la jauge de contrainte 53 la force d'insertion de la cosse dans l'alvéole et on s'assure que cette force reste en dessous de seuils prédéterminés en fonction de la profondeur d'insertion. En cas de dépassement d'un seuil le dispositif émet une alerte et stoppe le processus d'introduction.

Cette insertion directe, qui permet de raccourcir le temps de cycle de la machine, est rendue possible lorsque les valeurs des translations t₁ et t₂ ainsi que les valeurs des angles α₁ et α₂ sont situées en deçà de seuils prédéterminés expérimentalement en fonction de la résistance mécanique du fil et de la force d'insertion nécessaire pour introduire la cosse. On observe en effet que, lorsque la position de la cosse telle que représentée à la figure 1 présente une déviation trop importante, le fil placé entre la cosse 1 et le point de saisie 20 flambe sous l'effet de la force d'introduction de la cosse dans l'alvéole.

Un premier remède consiste donc à faire en sorte que la longueur de fil libre entre la cosse et le point de saisie 20 soit la plus faible possible, tout en restant non nulle, de manière à éviter tout contact entre la pince d'insertion et la cosse.

Un deuxième remède, comme le prévoit une deuxième option de mise en œuvre de l'invention consiste à aligner le point de saisie de la pince d'insertion avec l'axe XX'.

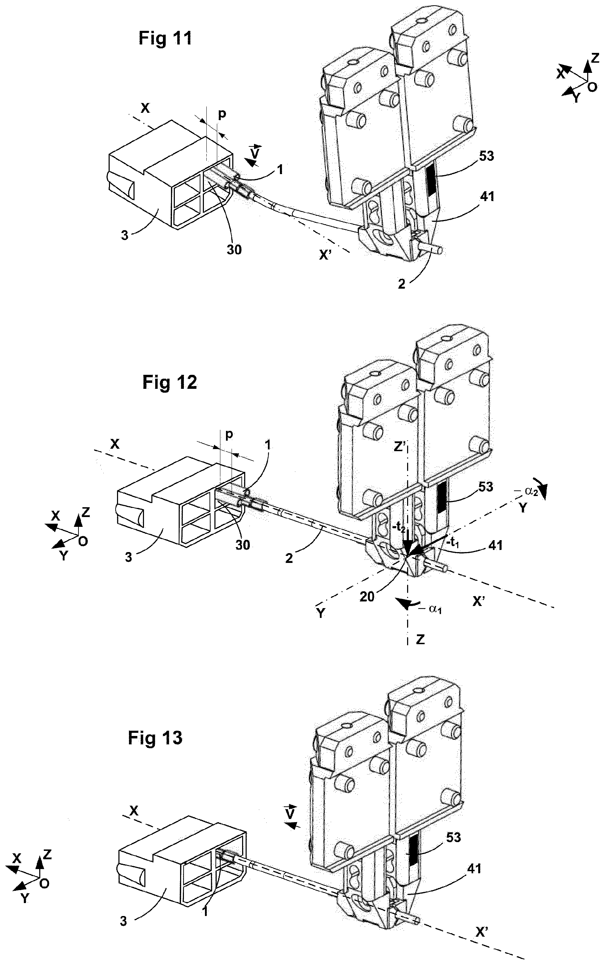

A cet effet on prévoit, au cours d'une **étape G** et après l'exécution de l'étape E, d'insérer partiellement sur une profondeur p prédéterminée et non nulle la cosse 1 dans l'alvéole 30, comme cela est illustré à la figure 11. En raison du parfait alignement de la cosse avec l'axe de l'alvéole, la force d'introduction reste très faible et en dessous du seuil de flambage du fil. Pendant cette première insertion, on mesure en continue la valeur de la force d'introduction à l'aide de la jauge de contrainte 53 et on surveille qu'elle ne dépasse pas un seuil pré établi. La profondeur p doit être suffisante pour que, à l'issue de cette opération, la cosse reste bloquée en rotation autour des axes XX', YY' et ZZ' et en translation autour des axes YY' et ZZ'. La cosse 1 reste libre de se déplacer en translation le long de l'axe XX'.

A une **étape H**, illustrée à la figure 12 on aligne alors le point de saisie 20 sur l'axe d'insertion XX' en faisant opérer au point de saisie 20 une translation de valeur -t₁ selon l'axe YY' et de valeur -t₂ selon l'axe ZZ' et en faisant tourner la pince d'une valeur angulaire égale à -α₁ autour de l'axe ZZ' et -α₂ autour de l'axe YY'. L'axe du fil 2 au point de saisie 20 est alors confondu avec l'axe longitudinal LL' de la cosse lui-même confondu avec l'axe d'insertion XX'. En d'autres termes, on annule les translations et les rotations opérées le long et autour des axes YY' et ZZ' lors de l'étape D.

On observera ici que cet alignement, qui a pour effet d'induire des forces de rappel élastique dans le fil entre le point de saisie et la cosse, peut se faire sans modifier la position de la cosse dans l'alvéole qui est bloquée en rotation autour des axes XX', YY', et ZZ' et en translation selon les axes YY' et ZZ'.

Au cours d'une **étape I**, on prévoit alors de poursuivre l'insertion finale de la cosse dans l'alvéole en déplaçant la pince d'insertion selon l'axe d'insertion XX', comme cela est illustré à la figure 13.

Pendant l'exécution de l'étape I, et de manière similaire à ce qui est évoqué ci-dessus pour l'étape F, on mesure à l'aide de la jauge de contrainte 53 la force d'insertion de la cosse dans l'alvéole et on s'assure que cette force reste en dessous de seuils prédéterminés en fonction de la profondeur d'insertion et du profil de la cosse. En cas de dépassement d'un seuil, le dispositif émet une alerte et stoppe le processus d'introduction.

Ce second mode de mise en œuvre de l'invention, permet de réduire les risques de flambage du fil.

De plus, en référence aux méthodes connues de l'art antérieur dans lesquelles l'extrémité de la cosse est mise en appui sur un bord de l'alvéole pendant cette opération d'alignement, la méthode selon l'invention, autorisée par une introduction partielle de la cosse avec une très faible force d'introduction du fait de l'alignement de l'axe de la cosse avec l'axe de l'alvéole, permet d'éviter toute détérioration de l'extrémité de la cosse et tout mouvement parasite non désiré de cette extrémité sous l'effet des forces de rappel élastiques engendrées par les sollicitations mécaniques du fil lors du déplacement de la pince d'insertion au cours de l'étape H.

On observera qu'il est possible, lors de l'insertion d'une série de cosses, à l'issue de l'étape E, de choisir en fonction des valeurs des translations t₁ et t₂ et des angles α₁ et α₂ de terminer l'opération d'insertion selon la première ou la seconde option de mise en oeuvre telles qu'exposées ci-dessus. Ainsi, lorsque ces valeurs sont inférieures à des seuils prédéterminés on insère la cosse directement dans l'alvéole en procédant à l'étape F à l'issue de l'étape E, et lorsqu'une de ces valeurs est supérieure au seuil prédéterminé associé à cette valeur, on exécute l'étape E puis les étapes G, H et I.

Lorsque la cosse est complètement insérée dans l'alvéole, ou peut, au cours d'une **étape J** finale exercer une force sur le fil selon la direction d'insertion mais dans un sens opposé au sens d'insertion de la cosse de manière à s'assurer que la cosse est correctement introduite dans l'alvéole. On arrête d'exercer cette force dans le sens de l'extraction de la cosse lorsque l'on atteint un seuil prédéterminé mesuré à l'aide de la jauge de contrainte 53.

Il importe de réaliser les étapes A à F ou les étapes A à I, sans que la pince d'insertion 40 ne relâche le câble, de manière à s'affranchir des imprécisions relatives aux transferts d'une pince à une autre et liées au relâchement des contraintes élastiques engendrées par le serrage de la pince sur les fils composant le câble.

Aussi, avant d'introduire la cosse d'une première extrémité du câble 2 dans une première alvéole 30 d'un premier connecteur 3, deux options se présentent.

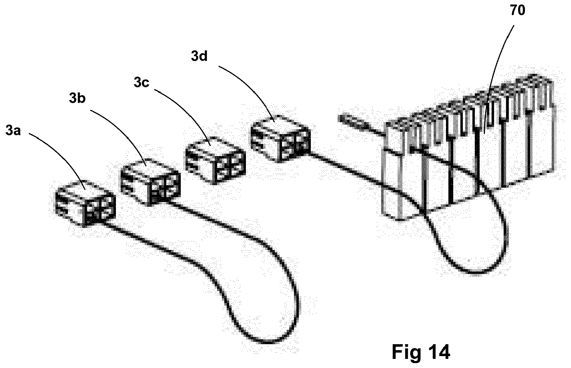

En référence à la figure 14, une première option consiste, après avoir mis en mémoire les paramètres d'alignement de la cosse située sur la première extrémité du câble, à réaliser l'alignement de la cosse située sur la seconde extrémité du câble selon le même mode opératoire que celui décrit ci-dessus. On peut alors introduire successivement la cosse de la première extrémité dans l'alvéole d'un premier connecteur 3a et la cosse de la deuxième extrémité dans l'alvéole d'un second connecteur 3b comme cela est illustré à la figure 14.

Lorsque l'ordre d'introduction des cosses dans les alvéoles doit suivre une séquence précise et liée par exemple à l'encombrement d'une pluralité de câbles sur un connecteur, une seconde option consiste à insérer la cosse de la première extrémité du câble dans l'alvéole d'un premier connecteur 3d et à disposer la seconde extrémité du câble sur un poste d'attente comprenant un jeu de pinces intermédiaires 70.

L'équipement des alvéoles du second connecteur 3c pourra alors se faire de manière différée selon un ordre d'introduction des cosses dans les alvéoles propres à ce second connecteur 3c. Le robot va alors rechercher une seconde extrémité de câble et, sans relâcher le câble, procède aux opérations d'alignement et d'insertion telles que décrites aux étapes A à F ou A à I.

En raison de la longueur limitée des câbles, il importe alors que les caméras soient disposées à proximité immédiate du point de stockage des câbles.

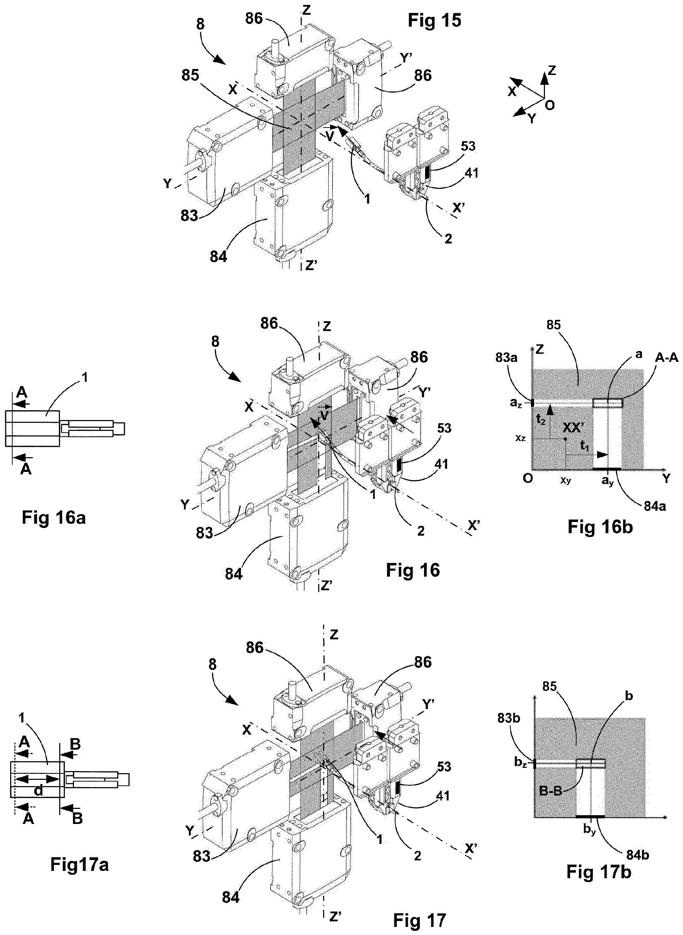

Les figures 15, 16, 16a, 16b,17, 17a et 17b permettent d'illustrer un second mode de réalisation de l'invention.

Selon ce mode alternatif, illustré à la figure 15, les caméras de champ sont remplacées par des caméras linéaires, dont le coût est moins élevé.

La première caméra linéaire 83 et la seconde caméra linéaire 84 sont disposées de sorte que les champs de ces caméras soient orientés respectivement selon les directions YY' et ZZ'. Les caméras sont fixes dans le repère OXYZ.

Un émetteur de lumière 86 est disposé axialement en face de chacune de ces caméras linéaires de manière à créer un rideau lumineux 85 formant un plan perpendiculaire à la direction d'insertion X'X.

Les caméras linéaires comprennent une ou plusieurs lignes de capteurs CCD ou CMOS, et permettent d'obtenir une image unidimensionnelle (une ligne) de la section d'un objet dans la direction du champ de la caméra.

A **l'étape B**, le robot approche la cosse 1 dans le rideau lumineux 85 de manière à présenter la section avant A-A de la cosse 1 comme cela est illustré par les figures 16 et 16a.

A **l'étape C**, en référence à la figure 16b, l'image obtenue par la première caméra linéaire 83 se présente sur l'axe ZZ' sous la forme d'un segment 83a dont les coordonnées du centre (0, az) sont facilement calculables dans le plan OYZ.

De même, l'image obtenue par la deuxième caméra linéaire 84 est un segment 84a formé sur l'axe YY' dont le centre a pour coordonnées (a_{y}, 0).

Le point a qui est représentatif du centre de la section A-A et qui est situé sur l'axe longitudinal LL' de la cosse, a pour coordonnées (a_{y}, a_{z}) dans le plan perpendiculaire à la direction XX' et passant par la première section A-A de la cosse.

On déplace alors la cosse selon la direction XX' d'une valeur d donnée, de manière à positionner une deuxième section B-B de la cosse, distincte de la première section, dans le rideau lumineux 85, comme cela est illustré par les figures 17 et 17a.

En référence à la figure 17b, l'image obtenue par la première caméra linéaire 83 se présente sur l'axe ZZ' sous la forme d'un segment 83b dont les coordonnées du centre (0, bz) sont calculables dans le plan OYZ. Et l'image obtenue par la deuxième caméra linéaire 84 est un segment 84b formé sur l'axe YY' dont le centre a pour coordonnées (b_{y}, 0).

Le point b qui est représentatif du centre de la section B-B et qui est également situé sur l'axe longitudinal LL' de la cosse, a pour coordonnées (b_{y}, b_{z}) dans le plan perpendiculaire à la direction XX' et passant par la section B-B.

Connaissant les coordonnées des points a et b et la distance d, il est alors facile de calculer l'orientation du vecteur V porté par l'axe longitudinal LL' de la cosse 1 dans le repère OXYZ.

Il convient de remarquer ici que ce mode de calcul peut connaitre de nombreuses variantes. Ainsi, à titre d'exemple, il est possible de retenir les coordonnés d'un bord de la cosse qui correspondent aux coordonnées d'un des bords des segments 83a et 84a ou des segments 83b et 84b.

De même, on peut déterminer les coordonnées de la projection du vecteur V respectivement dans les plans perpendiculaires aux axes ZZ' et YY' et calculer alors des angles de déviation α₁ et α₂ de manière similaire au mode opératoire exposé pour le premier mode de réalisation de l'invention.

A l'issue de l'étape C, de manière identique à ce qui est exposé plus haut pour le premier mode de réalisation de l'invention, on exécute **l'étape D**, au cours de laquelle le robot oriente la cosse 1 selon la direction d'insertion XX' comme cela est illustré à la figure 6 de manière à aligner puis à confondre l'axe longitudinal LL' de la cosse avec l'axe d'insertion XX' de la cosse dans l'alvéole 30 en effectuant successivement deux rotations d'angles α₁ et α₂ autour des axes parallèles aux ZZ' et YY' passant par le point de saisie 20 et une translation en conservant l'axe LL' parallèle à l'axe XX'.

Après l'alignement de l'axe longitudinal LL' de la cosse avec la direction d'insertion XX' et connaissant la position dans le plan YOZ du point a (ou du point b) disposés sur l'axe LL' ainsi que la position dans ce plan de la projection de l'axe XX', on en déduit aisément les valeurs t₁ et t₂ des translations à effectuer selon les directions YY' et ZZ' (voir figure 7).

L'orientation angulaire de la cosse au cours de **l'étape E'** se fait alors en faisant tourner la cosse autour de l'axe XX', confondu à cet instant avec l'axe longitudinal LL' de la cosse 1. La cosse est placée dans le rideau lumineux 85. A l'aide du robot 4, on fait tourner la cosse autour de l'axe XX' jusqu'à ce que l'on obtienne une valeur maximale ou minimale des segments 83a et 83b représentative d'une position angulaire connue de la cosse autour de l'axe XX'. On fait alors tourner la cosse autour de l'axe XX' pour aligner la position angulaire de la cosse 1 autour de l'axe XX' avec la position angulaire de l'alvéole 30.

La détermination de la position du front avant 10 selon l'axe d'insertion XX' est obtenue lorsque ce dernier traverse le champ lumineux 85 au moment de l'introduction ou du retrait de la cosse 1.

On fera remarquer à ce stade, que cette deuxième forme d'exécution de l'invention ne permet pas de traiter avec précision toutes les formes de cosse. En particulier la recherche de la position angulaire de la cosse autour de l'axe d'insertion XX' reste moins précise que dans le cas où on utilise une caméra de champ apte à délivrer une image bidimensionnelle de la cosse.

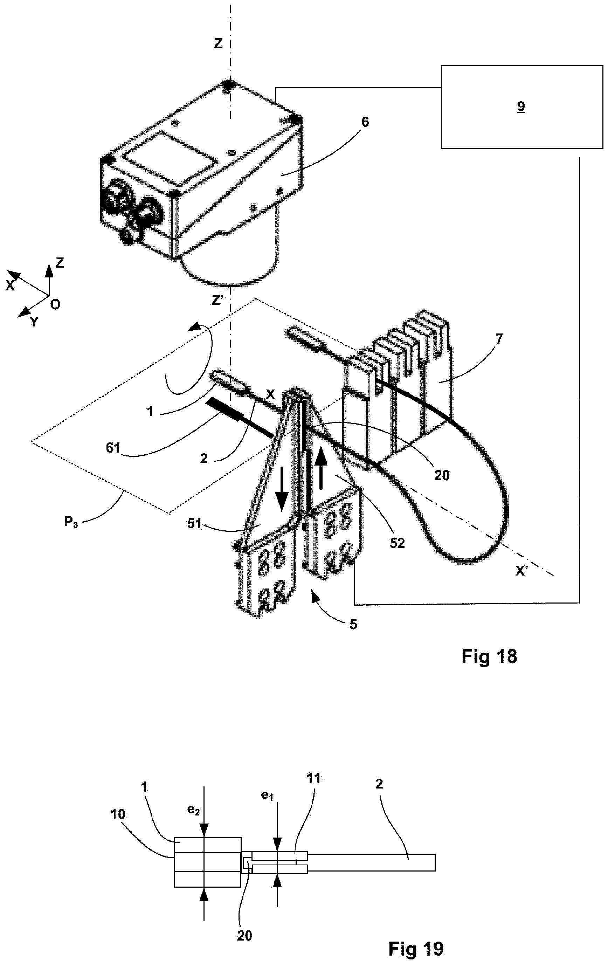

La figure 18 illustre une variante d'exécution de l'invention qu'il est possible de mettre en œuvre pour les deux alternatives de réalisation de l'invention exposées ci-dessus.

Cette variante a pour objet de prépositionner la cosse selon une orientation angulaire donnée de manière à ce que, au cours de l'étape E ou E' on puisse faire tourner la cosse autour de l'axe d'insertion XX' selon une direction donnée et prédéterminée.

Cette variante s'exécute donc avant l'étape A, sur un dispositif séparé, et de préférence au cours d'un cycle en temps masqué par rapport au cycle d'exécution des étapes A, B, C, D, E ou E', F, G, H et I.

On saisit le câble 2 en un point de saisie proche de la cosse à l'aide d'une pince de prépositionnement 5.

La pince de prépositionnement 5 comprend deux branches 51 et 52 animées en mouvement selon deux directions opposées dans un plan perpendiculaire à l'axe du câble au point de saisie, ici confondu avec la direction d'insertion XX'.

En déplaçant les branches 51 et 52 l'une par rapport à l'autre dans des directions opposées, on peut faire tourner le câble 2 autour de son axe au point de saisie.

On positionne la cosse dans le champ d'une caméra de champ de prépositionnement 6 de manière à obtenir une image bidimensionnelle 61 d'un contour de la cosse dans un plan de projection P₃ perpendiculaire à l'axe du champ de la caméra de prépositionnement 6, ici confondu avec l'axe ZZ'.

La caméra de prépositionnement 6 et la pince de prépositionnement sont reliées à l'unité centrale 9 qui contient les instructions codées pour analyser les images 61 et piloter le mouvement de la pince de prépositionnement 5.

De manière similaire à ce qui est exposé pour l'étape E décrite dans les paragraphes précédents de la présente description, on fait tourner le câble 2 autour de la direction d'insertion et on mesure une ou plusieurs distances caractéristiques entre des points prédéterminés du contour de la cosse telles que les largeurs e₁ et e₂ déjà décrites et illustrées à la figure 19.

La cosse tourne autour de l'axe du câble en décrivant un cône plus ou moins large. Lorsque, les valeurs des distances caractéristiques, ici e₁ et e₂, sont dans une marge de tolérance donnée par rapport à des valeurs préétablies, on considère que la position angulaire de la cosse autour de l'axe XX' est proche d'une valeur connue, par exemple égale à la position angulaire de l'alvéole +/- 5°.

On fait alors tourner la cosse d'une valeur supplémentaire supérieure à la largeur de cet intervalle de tolérance dans une direction donnée, par exemple d'une valeur de +15°, de sorte que la position angulaire de la cosse est supérieure d'une valeur comprise entre +10° et +20° par rapport à la position angulaire de l'alvéole 30.

Ce prépositionnement angulaire permet, au cours de l'étape E ou E', de commencer à faire tourner la cosse autour de l'axe XX' dans une direction opposée à la valeur angulaire supplémentaire imposée lors de l'étape de prépositionnement, pour trouver la position angulaire finale de la cosse. Cet aménagement permet d'éviter d'avoir à faire tourner la cosse sur des valeurs angulaires importantes, et de s'affranchir du risque que la pince, au cours de sa rotation, ne vienne en contact avec la partie arrière du câble.

A l'issue de ce prépositionnement, les deux extrémités du câble peuvent utilement être disposées sur des pinces de stockage intermédiaire 7 en attente d'être saisies, au cours de l'étape A, par la pince d'insertion 41.

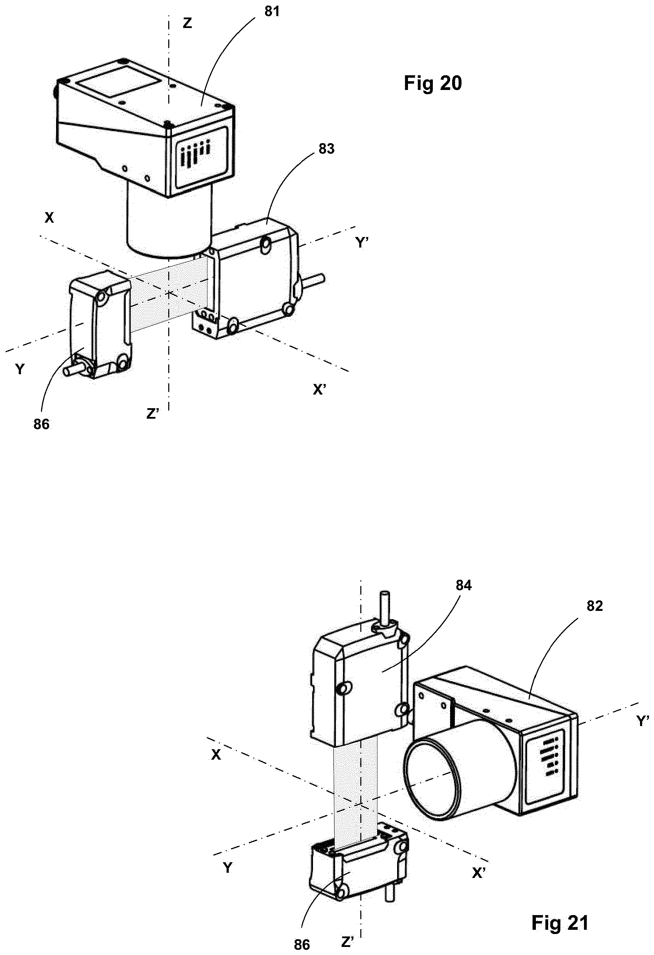

Les figures 20 et 21 illustrent le cas dans lequel, toujours pour des raisons d'économie, on réalise une combinaison de la première et de la seconde forme d'exécution de l'invention en utilisant simultanément une caméra de champ (81) dont le champ est orienté selon une première direction ZZ' (figure 20) et une caméra linaire (83) dont le champ est orienté selon une seconde direction YY'.

De manière alternative (figure 21), il est tout à fait possible de choisir une caméra de champ 82 dont le champ est orienté selon la direction YY' et une caméra linéaire dont l'axe du champ est orienté selon la direction ZZ'.

La mise en œuvre de ce dispositif mixte s'appuie sur la combinaison des enseignements décrits ci-dessus pour la première et la seconde forme de réalisation de l'invention, et que l'homme du métier saura mettre en œuvre mutatis mutandis.

Cette combinaison permet de conserver les avantages d'une caméra de champ pour la recherche de la position angulaire de la cosse autour de l'axe d'insertion XX' lors de l'exécution de l'étape E ou E'.

De manière à minimiser les inconvénients évoqués ci-dessus concernant la polyvalence réduite d'une caméra linaire pour des cosses de formes complexes, on s'arrange pour que la caméra de champ soit disposée sur un axe présentant les plus fortes disparités de forme lorsque l'on projette l'image des cosses à mettre en œuvre dans un plan perpendiculaire à l'axe du champ de cette caméra.

On comprendra aisément, comme cela a été évoqué dans les paragraphes qui précèdent, que les modes d'exécution du procédé et de réalisation du dispositif d'insertion tels que décrit ci-dessus, peuvent connaitre de multiples variantes, et que l'homme du métier saura trouver, en faisant appel à ses compétences normales, des formes équivalentes permettant d'obtenir des résultats identiques.

### NOMENCLATURE

1 Cosse.
10 Extrémité avant de la cosse.
11 Sertissage.
12 Bord extérieur gauche de la cosse.
13 point significatif.
2 Câble.
20 Point de saisie du câble.
3, 3a, 3b, 3c, 3d Connecteur.
30 Alvéole.
4 Robot 6 axes.
40 Tète du robot.
41, 41a, 41b Pince d'insertion.
42 Poin
5 Pince de pré positionnement.
51, 52 Branche de saisie de la pince de prépositionnement.
53 Jauge de contrainte.
6 Caméra de pré positionnement.
61 Image de la cosse dans un plan perpendiculaire à la direction du champ de la caméra de prépositionnement.
7 Pinces de stockage
70 Pinces de stockage intermédiaire/poste d'attente.
8 Caméra.
81 Première caméra de champ.
82 Deuxième caméra de champ.
81a, 82a Image de la projection de la cosse dans un plan perpendiculaire à la direction du champ de la première ou de la deuxième caméra de champ.
81b, 82b Projection du bord extérieur gauche de la cosse dans le plan perpendiculaire à l'axe du champ de vision de la caméra de champ.
83 Première caméra linéaire.
84 Deuxième caméra linéaire.
85 Rideau lumineux.
83a, 84a, 83b, 84b Image linéaire du segment représentatif de la largeur ou de la longueur d'une section de la cosse.
86 Emetteur de lumière.
9 Unité centrale.
LL' Axe longitudinal de la cosse.
L₁L'₁ Projection dans le plan P₁ de l'axe longitudinal de la cosse LL'.
L₂L'₂ Projection dans le plan P₂ de l'axe longitudinal de la cosse LL'.
V Vecteur orienté porté par l'axe longitudinal de la cosse.
a Centre de la section avant.
b Centre de la section arrière.
XX' Axe d'insertion.
X₁X'₁ Projection dans le plan P₁ de l'axe d'insertion XX'.
X₂X'₂ Projection dans le plan P₂ de l'axe d'insertion XX'.
YY' Axe transversal.
ZZ' Axe vertical.
e1, e2 Distances caractéristiques entre des points prédéterminés de la cosse.
P₁, P₂, P₃ Plan de projection perpendiculaire à l'axe du champ d'une caméra de champ.
α₁, α₂ Angle de déviation formé par la cosse avec la direction d'insertion.
t₁, t₂ Translations de l'axe LL' dans les directions YY' et ZZ'.
d Décalage entre la section avant A-A et la section arrière B-B de la cosse.
p Profondeur de l'insertion partielle.

## Revendications

1. Procédé d'insertion dans une alvéole (30) d'un connecteur (3) d'une cosse (1) sertie à l'extrémité d'un câble (2), tel **que**, au cours dudit procédé d'insertion, on exécute les étapes suivantes :
- Etape A : à l'aide d'une pince d'insertion (41, 41a, 41b) montée sur un robot (4) apte à déplacer ladite pince d'insertion en translation dans trois directions indépendantes (XX', YY', ZZ') et en rotation autour de chacune de ces trois directions, on saisit le câble (2) en un point de saisie (20) proche de la cosse (1), et on positionne la pince d'insertion de sorte que, au point de saisie (20), le câble est sensiblement tangent à une direction d'insertion (XX') de la cosse (1) dans l'alvéole (30) dans un repère (OXYZ),
- Etape B : on fait avancer la pince d'insertion (41) selon la direction d'insertion (XX') de manière à présenter la cosse (1) dans le champ d'une première caméra (81, 83) et d'une deuxième caméra (82, 84) dont les champs de vision sont orientés selon deux axes orthogonaux (ZZ', YY') situés dans un plan perpendiculaire à la direction d'insertion (XX'), **caractérisé par**:
- Etape C : à l'aide des images (81a, 82a) formées par chacune des caméras dans des plans (P₁, P₂) ou sur des axes (YY', ZZ') perpendiculaires à l'axe de chacun des champs de vision desdites caméras, on détermine la position dans le repère (OXYZ) d'un axe longitudinal (LL') de la cosse (1),
- Etape D : à l'aide du robot (4), on déplace la pince d'insertion (41) de manière à confondre l'axe longitudinal (LL') de la cosse (1) avec l'axe d'insertion (XX') de la cosse (1) dans l'alvéole (30).

2. Procédé selon la revendication 1 dans lequel, à l'étape D, on procède aux opérations suivantes
- on effectue des rotations (α₁, α₂) de la pince d'insertion (41) autour d'axes passant par le point de saisie (20) et parallèles aux axes des champs de vision (ZZ' et YY') de manière à rendre l'axe longitudinal (LL') de la cosse (1) parallèle à la direction d'insertion (XX'),
- on translate (t₁, t₂) la pince d'insertion selon les axes orthogonaux perpendiculaires à la direction d'insertion (YY', ZZ') (1) en conservant l'axe longitudinal (LL') de la cosse (1) parallèle à l'axe d'insertion (XX'), de manière à confondre l'axe longitudinal (LL') de la cosse avec l'axe d'insertion (XX').

3. Procédé selon la revendication 1 ou la revendication 2, dans lequel la première et la deuxième caméra sont des caméras de champ (81, 82) permettant d'obtenir une image tridimensionnelle (81a, 82a) de la projection de la cosse dans un plan de projection (P₁, P₂) perpendiculaire à l'axe du champ de vision (ZZ', YY') de chacune des caméras et dans lequel, à l'étape C, on procède aux opérations suivantes :
- pour chacune des images (81a, 82a), on détermine un angle de déviation (α₁, α₂) formé par une droite (II') parallèle ou confondue à l'axe longitudinal (LL') de la cosse et identifiable sur l'image (81a, 82a) de la cosse (1) par rapport à une droite parallèle à la direction d'insertion et située dans ledit plan de projection (P₁, P₂),
- on détermine l'orientation de l'axe longitudinal (LL') de la cosse en additionnant deux rotations autour des axes du champ de vision de chacune des caméras d'une valeur correspondant à chacun de ces angles de déviation (α₁, α₂).

4. Procédé selon la revendication 3, dans lequel, à l'issue de l'étape D et au cours d'une étape E, à l'aide d'une des caméras de champ (81) on mesure une ou plusieurs distances caractéristiques (e₁, e₂) entre des points prédéterminés du contour de la cosse (1) et, à l'aide du robot (4), on fait tourner la pince d'insertion (41) autour de l'axe d'insertion (XX') jusqu'à ce que les valeurs de ces distances soient égales à des valeurs prédéterminées correspondant à une position angulaire connue de la cosse autour de son axe longitudinal (LL'), et on ajuste la position angulaire de la cosse autour de la direction d'insertion (XX') par rapport à la position angulaire de l'alvéole (30).

5. Procédé selon la revendication 1 ou la revendication 2, dans lequel la première et la deuxième caméra sont des caméras linéaires (83, 84) associées à un rideau lumineux (85) et permettant chacune d'engendrer sur une droite (ZZ', YY') parallèle à la direction des capteurs de chaque caméra (83, 84) l'image de segments (83a, 84a, 83b, 84b) représentatifs de la largeur ou de la longueur d'une section de la cosse, et dans lequel, à l'étape C, on procède aux opérations suivantes :
- on fait avancer la pince d'insertion (41) selon la direction d'insertion (XX') de manière à présenter dans le rideau lumineux (85) une première section (A-A) de la cosse (1) et on détermine des coordonnées dans le repère orthonormé d'un point (a) placé sur l'axe longitudinal (LL') de la cosse (1),
- on fait de nouveau avancer la pince d'insertion (41) selon la direction d'insertion (XX') de manière à présenter dans le rideau lumineux (85) une deuxième section (B-B) de la cosse, distincte de la première section (A-A), et on détermine des coordonnées dans le repère orthonormé d'un point (b) placé sur l'axe longitudinal (LL') de la cosse (1),
- on détermine l'orientation de l'axe longitudinal (LL') de la cosse passant par ces deux points (a, b).

6. Procédé selon la revendication 5 dans lequel, à l'issue de l'étape D et au cours d'une étape E', à l'aide du robot (4), on fait tourner la pince d'insertion (41) autour de l'axe d'insertion XX'), et on ajuste la position angulaire finale de la cosse (1) autour de la direction d'insertion (XX') par rapport à la position angulaire de l'alvéole en recherchant des valeurs maximales ou minimales de deux segments représentatifs de la largeur ou de la longueur d'une section de la cosse (83a, 84a).

7. Procédé selon la revendication 4 ou la revendication 6, dans lequel, postérieurement à l'étape E ou E', on exécute une étape F au cours de laquelle, à l'aide du robot (4), on positionne la cosse (1) en face de l'alvéole (30) du connecteur (3) et on introduit la cosse (1) dans l'alvéole (30) en déplaçant, la pince d'insertion (41) selon la direction d'insertion (XX').

8. Procédé selon la revendication 4 ou la revendication 6, dans lequel, postérieurement à l'étape E ou E', on exécute les étapes suivantes :
- Etape G : on insère partiellement la cosse (1) dans l'alvéole (30) sur une profondeur (p) prédéterminée et non nulle, en translatant la pince d'insertion le long de l'axe d'insertion (XX'), de sorte que, à l'issue de cette étape, la cosse (1) est bloquée en rotation autour des axes (XX', YY' et ZZ') et en translation autour des axes perpendiculaires à la direction d'insertion (YY' et ZZ') et reste libre de se déplacer en translation le long de l'axe d'insertion (XX').
Etape H : on translate la pince d'insertion (41) au point de saisie 20 selon les axes perpendiculaires à la direction d'insertion (YY' et ZZ') d'une valeur égale et de signe opposé (-t₁, -t₂) aux valeurs des translations opérées à l'étape D et on fait tourner la pince autour des axes perpendiculaires à la direction d'insertion (YY' et ZZ') d'une valeur angulaire (-α₁, -α₂) égale et de signe opposé aux valeurs angulaires des rotations opérées à l'étape D de manière à aligner l'axe du fil (2) au point de saisie (20) sur l'axe d'insertion XX',
Etape I : on insère complètement la cosse dans l'alvéole en déplaçant la pince d'insertion (41) selon l'axe d'insertion (XX').

9. Procédé d'insertion selon l'une des revendications 7 ou 8 dans lequel, au cours de l'étape F ou de l'étape I, on mesure à l'aide d'une jauge de contrainte (53) une force d'insertion de la cosse (1) dans l'alvéole (30) et on émet une alerte lorsque ladite force d'insertion est supérieure à des seuils prédéterminés en fonction de la profondeur d'insertion.

10. Procédé d'insertion selon la revendication 4 ou la revendication 6, dans lequel, préalablement à l'étape A, on prépositionne la cosse (1) autour de la direction d'insertion (XX') en exécutant les étapes au cours desquelles :
- à l'aide d'une pince de prépositionnement (5) apte à faire tourner un câble autour de l'axe du câble, on saisit le câble (2) en un point de saisie (20) proche de la cosse de sorte que, au point de saisie, le câble est sensiblement tangent à la direction d'insertion (XX'),
- on positionne la cosse (1) dans le champ d'une caméra de champ de prépositionnement (6) de manière à obtenir une image (61) d'un contour de la cosse,
- on mesure une ou plusieurs distances caractéristiques (e₁, e₂) entre des points prédéterminés du contour de la cosse et, on actionne la pince de prépositionnement (5) de manière à faire tourner le câble autour de son axe au point de saisie par la pince de prépositionnement (5) jusqu'à ce que les valeurs de ces distances soient comprises dans un intervalle de valeurs prédéterminées correspondant à une position angulaire connue de la cosse autour de son axe.
- on fait tourner le câble selon un sens de rotation prédéterminé d'un angle supérieur à la valeur angulaire de cet intervalle, de sorte que, au cours de l'étape E ou E', on fait tourner la cosse autour de l'axe d'insertion selon un sens de rotation inverse audit sens de rotation prédéterminé.

11. Dispositif d'insertion d'une cosse (1) sertie à l'extrémité d'un câble (2) dans une alvéole (30) d'un connecteur (3), le dispositif comprenant:
- une pince d'insertion (41) fixée sur la tête (40) d'un robot (4) apte à déplacer ladite pince d'insertion (41) en translation dans trois directions indépendantes (XX', YY', ZZ') et en rotation autour de chacune de ces trois directions,
- une première caméra (81, 83) et une deuxième caméra (82, 84) dont les champs de vision sont orientés selon deux axes orthogonaux (ZZ', YY') situés dans un plan perpendiculaire à la direction d'insertion (XX'),
- une unité centrale (9) reliée au robot (4) et aux caméras (81, 82, 83, 84) comprenant des instructions codées pour analyser les images (81a, 82a, 83a, 84a, 83b, 84b) provenant desdites caméras et piloter les mouvements de la pince d'insertion (41) selon le procédé d'une quelconque des revendications 1 à10.

12. Dispositif selon la revendication 11, dans lequel la première (81) et la deuxième (82) caméra sont des caméras de champ permettant d'obtenir une image bidimensionnelle ((81a, 82a) de la cosse dans un plan (P₁, P₂) perpendiculaire au champ de ladite caméra.

13. Dispositif d'insertion selon la revendication 11, dans lequel la première (83) et la seconde (84) caméra sont des caméras linéaires collaborant avec des émetteurs de lumière (86) formant un rideau lumineux (85) perpendiculaire à la direction d'insertion (XX'), et permettant d'engendrer sur une droite parallèle à la direction des capteurs de la caméra l'image de segments (83a, 84a, 83b, 84b) représentatifs de la largeur ou de la longueur d'une section (A-A, B-B) de la cosse (1).

14. Dispositif d'insertion selon l'une quelconque des revendications 11 à 13, dans lequel la tête (40) du robot (4) est mobile en rotation autour d'un axe et supporte deux pinces d'insertion (41a, 41b), de sorte que le robot (4) peut saisir simultanément les deux extrémités d'un même câble (2).

15. Dispositif d'insertion selon l'une quelconque des revendications 11 à 14 comportant des moyens de prépositionnement comprenant :
- une caméra de prépositionnement (6) apte à former une image bidimensionnelle (61) de la cosse dans un plan (P₃) perpendiculaire à l'axe du champ (ZZ') de la caméra de prépositionnement, et à déterminer des valeurs de distances (e₁, e₂) caractéristiques entre des points prédéterminés du contour de la cosse (1),
- une pince de prépositionnement (5) comprenant deux branches (51, 52) mobiles l'une par rapport à l'autre selon deux directions opposées contenues dans un plan perpendiculaire à l'axe du câble au point de saisie (20), de sorte que, en déplaçant les branches (51, 52) de la pince de prépositionnement dans des directions opposées, on fait tourner le câble (2) autour de son axe.

## Patentansprüche

1. Verfahren zum Einstecken einer auf das Ende eines Kabels (2) aufgequetschten Kabelklemme (1) in eine Hülse (30) eines Verbinders (3), derart, dass, im Verlauf des Einsteckverfahrens, die folgenden Schritte durchgeführt werden:
- Schritt A: mittels einer Einsteckzange (41, 41a, 41b), die auf einem Roboter (4) montiert ist, der in der Lage ist, die Einsteckzange in Translation in drei unabhängigen Richtungen (XX', YY', ZZ') und in Rotation um jede dieser drei Richtungen herum zu bewegen, wird das Kabel (2) in einem Griffpunkt (20) nahe der Kabelklemme (1) ergriffen, und die Einsteckzange wird so positioniert, dass, am Griffpunkt (20), das Kabel im Wesentlichen eine Einsteckrichtung (XX') der Kabelklemme (1) in die Hülse (30) in einem Bezugssystem (OXYZ) tangiert,
- Schritt B: die Einsteckzange (41) wird gemäß der Einsteckrichtung (XX') vorwärts bewegt, so dass die Kabelklemme (1) in dem Feld einer ersten Kamera (81, 83) und einer zweiten Kamera (82, 84) präsentiert wird, deren Sichtfelder gemäß zwei orthogonalen Achsen (ZZ', YY') ausgerichtet sind, die in einer Ebene liegen, die senkrecht zu der Einsteckrichtung (XX') ist,
**gekennzeichnet durch**
- Schritt C: mittels der Bilder (81a, 82a), die von jeder der Kameras in Ebenen (P₁, P₂) oder auf Achsen (YY' , ZZ'), die senkrecht zu der Achse jedes der Sichtfelder der Kameras sind, gebildet werden, wird die Position einer Längsachse (LL') der Kabelklemme (1) in dem Bezugssystem (OXYZ) bestimmt,
- Schritt D: mittels des Roboters (4) wird die Einsteckzange (41) bewegt, so dass die Längsachse (LL') der Kabelklemme (1) mit der Einsteckachse (XX') der Kabelklemme (1) in der Hülse (30) zusammenfällt.

2. Verfahren nach Anspruch 1, bei dem, in Schritt D, die folgenden Arbeitsgänge vorgenommen werden:
- es werden Rotationen (α₁, α₂) der Einsteckzange (41) um Achsen durchgeführt, die durch den Griffpunkt (20) verlaufen und zu den Achsen der Sichtfelder (ZZ' und YY') parallel sind, so dass die Längsachse (LL') der Kabelklemme (1) zu der Einsteckrichtung (XX') parallel wird,
- die Einsteckzange (41) wird gemäß den orthogonalen Achsen, die senkrecht zu der Einsteckrichtung (XX', ZZ') sind, in Translation bewegt (t₁, t₂), indem die Längsachse (LL') der Kabelklemme (1) zu der Einsteckrichtung (XX') parallel aufrechterhalten wird, so dass die Längsachse (LL') der Kabelklemme mit der Einsteckachse (XX') zusammenfällt.

3. Verfahren nach Anspruch 1 oder Anspruch 2, bei dem die erste und die zweite Kamera Feldkameras (81, 82) sind, die gestatten, ein zweidimensionales Bild (81a, 82a) der Projektion der Kabelklemme in einer Projektionsebene (P₁, P₂), die senkrecht zu der Achse des Sichtfelds (ZZ', YY') jeder der Kameras ist, zu erhalten, und bei dem, in Schritt C, die folgenden Arbeitsgänge vorgenommen werden:
- für jedes der Bilder (81a, 82a) wird ein Ablenkungswinkel (α₁, α₂) bestimmt, der von einer Geraden (II') gebildet ist, die zu der Längsachse (LL') der Kabelklemme parallel ist oder mit ihr zusammenfällt und auf dem Bild (81a, 82a) der Kabelklemme (1) gegenüber einer Geraden identifizierbar ist, die parallel zu der Einsteckrichtung ist und in der Projektionsebene (P₁, P₂) liegt,
- die Ausrichtung der Längsachse (LL') der Kabelklemme wird bestimmt, in dem zwei Rotationen um Achsen des Sichtfelds jeder der Kameras um einen Wert hinzugefügt werden, der jedem dieser Ablenkungswinkel (α₁, α₂) entspricht.

4. Verfahren nach Anspruch 3, bei dem, am Ende von Schritt D und im Verlauf eines Schrittes E, mittels einer der Feldkameras (81) eine oder mehrere charakteristische Distanzen (e₁, e₂) zwischen vorab bestimmten Punkten der Kontur der Kabelklemme (1) gemessen werden und, mittels des Roboters (4), die Einsteckzange (41) um die Einsteckachse (XX') gedreht wird, bis die Werte dieser Distanzen gleich den vorab bestimmten Werten sind, die einer bekannten Winkelposition der Kabelklemme um ihre Längsachse (LL') entsprechen, und die Winkelposition der Kabelklemme um die Einsteckachse (XX') gegenüber der Winkelposition der Hülse (30) eingestellt wird.

5. Verfahren nach Anspruch 1 oder Anspruch 2, bei dem die erste und die zweite Kamera Zeilenkameras (83, 84) sind, die einem Lichtvorhang (85) zugehörig sind und jede gestatten, auf einer Geraden (ZZ', XX'), die parallel zu der Richtung der Sensoren jeder Kamera (83, 84) ist, das Bild von Segmenten (83a, 84a, 83b, 84b) zu erzeugen, die für die Breite oder für die Länge eines Abschnitts der Kabelklemme repräsentativ sind, und bei dem, in Schritt C, die folgenden Arbeitsgänge vorgenommen werden:
- die Einsteckzange (41) wird gemäß der Einsteckrichtung (XX') vorwärts bewegt, so dass in dem Lichtvorhang (85) ein erster Abschnitt (A-A) der Kabelklemme (1) präsentiert wird, und Koordinaten werden in dem orthonormalen Bezugssystem eines Punktes (a) bestimmt, der auf der Längsachse (LL') der Kabelklemme (1) platziert ist,
- die Einsteckzange (41) wird erneut gemäß der Einsteckrichtung (XX') erneut vorwärts bewegt, so dass in dem Lichtvorhang (85) ein zweiter Abschnitt (B-B) der Kabelklemme präsentiert wird, der von dem ersten Abschnitt (A-A) verschieden ist, und Koordinaten werden in dem orthonormalen Bezugssystem eines Punktes (b) bestimmt, der auf der Längsachse (LL') der Kabelklemme (1) platziert ist,
- die Ausrichtung der Längsachse (LL') der Kabelklemme, die durch diese zwei Punkte (a, b) verläuft, wird bestimmt.

6. Verfahren nach Anspruch 5, bei dem, am Ende von Schritt D und im Verlauf eines Schrittes E', mittels des Roboters (4), die Einsteckzange (41) um die Einsteckachse (XX') gedreht wird und die endgültige Winkelposition der Kabelklemme (1) um die Einsteckrichtung (XX') gegenüber der Winkelposition der Hülse eingestellt wird, indem maximale oder minimale Werte von zwei Segmenten gesucht werden, die für die Breite oder für die Länge eines Abschnitts der Kabelklemme (83a, 84a) repräsentativ sind.

7. Verfahren nach Anspruch 4 oder Anspruch 6, bei dem, nach Schritt E oder E', ein Schritt F durchgeführt wird, in dessen Verlauf, mittels des Roboters (4), die Kabelklemme (1) der Hülse (30) des Verbinders (3) gegenüber positioniert wird und die Kabelklemme (1) in die Hülse (30) eingeführt wird, indem die Einsteckzange (41) gemäß der Einsteckrichtung (XX') bewegt wird.

8. Verfahren nach Anspruch 4 oder Anspruch 6, bei dem, nach Schritt E oder E', die folgenden Schritte durchgeführt werden:
Schritt G: die Kabelklemme (1) wird teilweise in die Hülse (30) über eine vorab bestimmt Tiefe (p) ungleich null eingesteckt, indem die Einsteckzange entlang der Einsteckachse (XX') in Translation so bewegt wird, dass, am Ende von diesem Schritt, die Kabelklemme (1) in ihrer Rotation um Achsen (XX', YY' und ZZ') und in Translation um Achsen, die senkrecht zu der Einsteckrichtung (YY' und ZZ') sind, gesperrt ist, und sich entlang der Einsteckachse (XX') weiterhin frei in Translation bewegen kann,
Schritt H: die Einsteckzange (41) wird am Griffpunkt (20) gemäß den Achsen, die senkrecht zu der Einsteckrichtung (YY' und ZZ') sind, in Translation um einen Wert bewegt, der gleich und umgekehrten Vorzeichens (-t₁, -t₂) zu den Werten der in Schritt D durchgeführten Translationen ist, und die Zange wird um Achsen, die senkrecht zu der Einsteckrichtung (XX' und ZZ') sind, um einen Winkelwert (-α₁, -α₂) gedreht, der gleich und umgekehrten Vorzeichens zu den Winkelwerten der in Schritt D durchgeführten Translationen ist, so dass die Achse des Drahtes (2) mit dem Griffpunkt (20) auf der Einsteckachse (XX') in Flucht gebracht wird,
Schritt I: die Kabelklemme wird vollständig in die Hülse eingeführt, indem die Einsteckzange (41) gemäß der Einsteckachse (XX') bewegt wird.

9. Verfahren nach einem der Ansprüche 7 oder 8, bei dem, im Verlauf von Schritt F oder von Schritt I, mittels eines Dehnungsmessstreifens (53) eine Kraft zum Einstecken der Kabelklemme (1) in die Hülse (30) gemessen wird und eine Warnung ausgegeben wird, wenn die Einsteckkraft größer als Schwellwerte ist, die in Abhängigkeit von der Einstecktiefe vorab bestimmt wurden.

10. Verfahren nach Anspruch 4 oder Anspruch 6, bei dem, vor Schritt A, die Kabelklemme (1) um die Einsteckrichtung (XX') vorpositioniert wird, indem die Schritte durchgeführt werden, in deren Verlauf:
- mittels einer Vorpositionierzange (5), die in der Lage ist, ein Kabel um die Achse des Kabels zu drehen, das Kabel (3) in einem Griffpunkt (20) nahe der Kabelklemme so ergriffen wird, dass das Kabel, am Griffpunkt, die Einsteckrichtung (XX') im Wesentlichen tangiert,
- die Kabelklemme (1) in dem Feld einer Vorpositionierfeldkamera (6) so positioniert wird, dass sich ein Bild (61) einer Kontur der Kabelklemme ergibt,
- eine oder mehrere charakteristische Distanzen (e₁, e₂) zwischen vorab bestimmten Punkten der Kontur der Kabelklemme gemessen werden und die Vorpositionierzange (5) betätigt wird, so dass das Kabel durch die Vorpositionierzange (5) am Griffpunkt um seine Achse gedreht wird, bis die Werte dieser Distanzen in einem Bereich vorab bestimmter Werte enthalten sind, die einer bekannten Winkelposition der Kabelklemme um ihre Achse entsprechen,
- das Kabel gemäß einer vorab bestimmten Rotationsrichtung um einen Winkel, der größer ist als der Winkelwert dieses Bereichs, so gedreht wird, dass, im Verlauf von Schritt E oder E', die Kabelklemme um die Einsteckachse gemäß einer Rotationsrichtung gedreht wird, die zu der vorab bestimmten Rotationsrichtung umgekehrt ist.

11. Vorrichtung zum Einstecken einer auf das Ende eines Kabels (2) aufgequetschten Kabelklemme (1) in eine Hülse (30) eines Verbinders (3), wobei die Vorrichtung umfasst:
- eine Einsteckzange (41), die auf dem Kopf (40) eines Roboter (4) befestigt ist, der in der Lage ist, die Einsteckzange (41) in Translation in drei unabhängigen Richtungen (XX', YY', ZZ') und in Rotation um jede dieser drei Richtungen herum zu bewegen,
- eine erste Kamera (81, 83) und eine zweite Kamera (82, 84), deren Sichtfelder gemäß zwei orthogonalen Achsen (ZZ', XX') ausgerichtet sind, die in einer Ebene liegen, die senkrecht zu der Einsteckrichtung (XX') ist,
- eine Zentraleinheit (9), die mit dem Roboter (4) und mit den Kameras (81, 82, 83, 84) verbunden ist und kodierte Anweisungen umfasst, um die Bilder (81a, 82a, 83a, 84a, 83b, 84b), die von den Kameras stammen, zu analysieren und um die Bewegungen der Einsteckzange (41) nach dem Verfahren einer der Ansprüche 1 bis 10 zu steuern.

12. Einsteckvorrichtung nach Anspruch 11, wobei die erste Kamera (81) und die zweite Kamera (82) Feldkameras sind, die gestatten, ein zweidimensionales Bild (81a, 82a) der Kabelklemme in einer Ebene (P₁, P₂), die senkrecht zu dem Feld der Kamera ist, zu erhalten.

13. Einsteckvorrichtung nach Anspruch 11, wobei die erste Kamera (83) und die zweite Kamera (84) Zeilenkameras sind, die mit Lichtsendern (86) zusammenwirken, die einen Lichtvorhang (85) bilden, der senkrecht zu der Einsteckrichtung (XX') ist, und gestatten, auf einer Geraden, die zu der Richtung der Sensoren der Kamera parallel ist, das Bild von Segmenten (83a, 84a, 83b, 84b) zu erzeugen, die für die Breite oder für die Länge eines Abschnitts (A-A, B-B) der Kabelklemme (1) repräsentativ sind.

14. Einsteckvorrichtung nach einem der Ansprüche 11 bis 13, wobei der Kopf (40) des Roboters (4) um eine Achse in Rotation beweglich ist und zwei Einsteckzangen (41a, 41b) so haltert, dass der Roboter (4) die zwei Enden eines gleichen Kabels (2) gleichzeitig ergreifen kann.

15. Einsteckvorrichtung nach einem der Ansprüche 11 bis 14, der Vorpositioniermittel aufweist, umfassend:
- eine Vorpositionierkamera (6), die in der Lage ist, ein zweidimensionales Bild (61) der Kabelklemme in einer Ebene (P₃) zu bilden, die senkrecht zu der Achse des Feldes (ZZ') der Vorpositionierkamera ist, und Werte von charakteristischen Distanzen (e₁, e₂) zwischen vorab bestimmten Punkten der Kontur der Kabelklemme (1) zu bestimmen,
- eine Vorpositionierzange (5), die zwei Griffe (51, 52) umfasst, die gemäß zwei entgegengesetzten Richtungen, die in einer Ebene enthalten sind, die senkrecht zu der Achse des Kabels am Griffpunkt (20) ist, so zueinander beweglich sind, dass, indem die Griffe (51, 52) der Vorpositionierzange in entgegengesetzten Richtungen bewegt werden, das Kabel (2) um seine Achse gedreht wird.

## Claims

1. Insertion method for inserting in a cell (30) a connector (3) of a terminal (1) crimped at the end of a cable (2), such that, during said insertion method, the following steps are performed:
- Step A: using an insertion clamp (41, 41a, 41b) mounted on a robot (4) adapted to move said insertion clamp in translation in three independent directions (XX', YY', ZZ') and in rotation about each of these three directions, gripping the cable (2) at a gripping point (20) close to the terminal (1), and positioning the insertion clamp such that, at the gripping point (20), the cable is substantially tangential to an insertion direction (XX') in which the terminal (1) is inserted in the cell (30) in a coordinate system (OXYZ),
- Step B: moving forward the insertion clamp (41) along the insertion direction (XX') to bring the terminal (1) within the field of a first camera (81, 83) and of a second camera (82, 84) whose fields of vision are oriented along two orthogonal axes (ZZ', YY') located in a plane perpendicular to the insertion direction (XX'), **characterised by**:
- Step C: using the images (81a, 82a) formed by each camera in the planes (P₁, P₂) or on axes (YY', ZZ') perpendicular to the axis of each field of vision of said cameras, determining the position in the coordinate system (OXYZ) of a longitudinal axis (LL') of the terminal (1),
- Step D: using the robot (4), moving the insertion clamp (41) so that the longitudinal axis (LL') of the terminal (1) coincides with the insertion axis (XX') of the terminal (1) in the cell (30).

2. Method according to claim 1, wherein, in step D, the following operations are performed:
- executing rotations (α₁, α₂) of the insertion clamp (41) about axes passing through the gripping point (20) and parallel to the axes of the fields of vision (ZZ' and YY') to make the longitudinal axis (LL') of the terminal (1) parallel to the insertion direction (XX'),
- translating (t₁, t₂) the insertion clamp along the orthogonal axes perpendicular to the insertion direction (YY', ZZ') (1), keeping the longitudinal axis (LL') of the terminal (1) parallel to the insertion axis (XX'), so that the longitudinal axis (LL') of the terminal coincides with the insertion axis (XX').

3. Method according to claim 1 or claim 2, wherein the first and second cameras are field cameras (81, 82) used to obtain a two-dimensional image (81a, 82a) of the projection of the terminal in a projection plane (P₁, P₂) perpendicular to the axis of the field of vision (ZZ', YY') of each camera and wherein, in step C, the following operations are performed:
- for each image (81a, 82a), determining an angle of deviation (α₁, α₂) formed by a straight line (II') parallel to or coincident with the longitudinal axis (LL') of the terminal and identifiable on the image (81a, 82a) of the terminal (1) relative to a straight line parallel to the insertion direction and located in said projection plane (P₁, P₂),
- determining the orientation of the longitudinal axis (LL') of the terminal by adding two rotations about the axes of the field of vision of each camera by a value corresponding to each of these angles of deviation (α₁, α₂).

4. Method according to claim 3, wherein, after step D and during a step E, using one of the field cameras (81), one or more characteristic distances (e₁, e₂) are measured between predetermined points of the contour of the terminal (1) and, using the robot (4), the insertion clamp (41) is rotated about the insertion axis (XX') until the values of these distances are equal to predetermined values corresponding to a known angular position of the terminal about its longitudinal axis (LL'), and the angular position of the terminal about the insertion direction (XX') is adjusted relative to the angular position of the cell (30).

5. Method according to claim 1 or claim 2, wherein the first and second cameras are linear cameras (83, 84) associated with a light curtain (85) and allowing each one to generate on a straight line (ZZ', YY') parallel to the direction of the sensors of each camera (83, 84) the image of segments (83a, 84a, 83b, 84b) representative of the width or length of a section of the terminal, and wherein, in step C, the following operations are performed:
- moving forward the insertion clamp (41) along the insertion direction (XX') to bring into the light curtain (85) a first section (A-A) of the terminal (1) and determining coordinates in the coordinate system of a point (a) placed on the longitudinal axis (LL') of the terminal (1),
- moving forward the insertion clamp (41) again along the insertion direction (XX') to bring into the light curtain (85) a second section (B-B) of the terminal, different from the first section (A-A), and determining coordinates in the coordinate system of a point (b) placed on the longitudinal axis (LL') of the terminal (1),
- determining the orientation of the longitudinal axis (LL') of the terminal passing through these two points (a, b).

6. Method according to claim 5, wherein, after step D and during a step E', using the robot (4), the insertion clamp (41) is rotated about the insertion axis (XX'), and the final angular position of the terminal (1) about the insertion direction (XX') is adjusted relative to the angular position of the cell by seeking maximum and minimum values of two segments representative of the width or length of a section of the terminal (83a, 84a).

7. Method according to claim 4 or claim 6, wherein, after step E or E', a step F is performed during which, using the robot (4), the terminal (1) is positioned opposite the cell (30) of the connector (3) and the terminal (1) is inserted in the cell (30) by moving the insertion clamp (41) along the insertion direction (XX').

8. Method according to claim 4 or claim 6, wherein, after step E or E', the following steps are performed:
- Step G: partially inserting the terminal (1) in the cell (30) to a predetermined and non-zero depth (p), by translating the insertion clamp along the insertion axis (XX'), so that, after this step, the terminal (1) is blocked in rotation about the axes (XX', YY' and ZZ') and in translation about the axes perpendicular to the insertion direction (YY' and ZZ') and remains free to move in translation along the insertion axis (XX').
- Step H: translating the insertion clamp (41) to the gripping point 20 along the axes perpendicular to the insertion direction (YY' and ZZ') by a value equal and of opposite sign (-t₁, -t₂) to the values of the translations performed in step D and rotating the clamp about the axes perpendicular to the insertion direction (YY' and ZZ') by an angular value (-α₁, -α₂) equal and of opposite sign to the angular values of the rotations performed in step D so that the axis of the wire (2) is aligned with the gripping point (20) on the insertion axis XX',
- Step I: fully inserting the terminal in the cell by moving the insertion clamp (41) along the insertion axis (XX').

9. Insertion method according to claim 7 or 8, wherein, during step F or step I, a strain gauge (53) is used to measure an insertion force applied to insert the terminal (1) in the cell (30) and an alert is emitted when said insertion force is greater than predetermined thresholds depending on the insertion depth.

10. Insertion method according to claim 4 or claim 6, wherein, before step A, the terminal (1) is prepositioned about the insertion direction (XX') by performing the following steps:
- using a prepositioning clamp (5) adapted to rotate a cable about the cable axis, gripping the cable (2) at a gripping point (20) close to the terminal so that, at the gripping point, the cable is substantially tangential to the insertion direction (XX'),
- positioning the terminal (1) in the field of a prepositioning field camera (6) to obtain an image (61) of a contour of the terminal,
- measuring one or more characteristic distances (e₁, e₂) between predetermined points of the contour of the terminal and, actuating the prepositioning clamp (5) to rotate the cable about its axis at the point of gripping by the prepositioning clamp (5) until the values of these distances are within an interval of predetermined values corresponding to a known angular position of the terminal about its axis.
- rotating the cable in a predetermined direction of rotation through an angle greater than the angular value of this interval, so that during step E or E', the terminal is rotated about the insertion axis in a direction of rotation opposite to said predetermined direction of rotation.

11. Device for inserting a terminal (1) crimped at the end of a cable (2) into a cell (30) of a connector (3), the device comprising:
- an insertion clamp (41) attached to the head (40) of a robot (4) adapted to move said insertion clamp (41) in translation in three independent directions (XX', YY', ZZ') and in rotation about each of these three directions,
- a first camera (81, 83) and a second camera (82, 84) whose fields of vision are oriented along two orthogonal axes (ZZ', YY') located in a plane perpendicular to the insertion direction (XX'),
- a CPU (9) connected to the robot (4) and to the cameras (81, 82, 83, 84) comprising encoded instructions to analyse the images (81a, 82a, 83a, 84a, 83b, 84b) from said cameras and to control the movements of the insertion clamp (41) according to the method of any one of claims 1 to 10.

12. Device according to claim 11, wherein the first camera (81) and the second camera (82) are field cameras used to obtain a two-dimensional image (81a, 82a) of the terminal in a plane (P₁, P₂) perpendicular to the field of said camera.

13. Insertion device according to claim 11, wherein the first camera (83) and the second camera (84) are linear cameras cooperating with light transmitters (86) forming a light curtain (85) perpendicular to the insertion direction (XX'), and used to generate on a straight line parallel to the direction of the camera sensors the image of segments (83a, 84a, 83b, 84b) representative of the width or length of a section (A-A, B-B) of the terminal (1).

14. Insertion device according to any one of claims 11 to 13, wherein the head (40) of the robot (4) is movable in rotation about an axis and supports two insertion clamps (41a, 41b), so that the robot (4) can grip the two ends of the same cable (2) simultaneously.

15. Insertion device according to any one of claims 11 to 14, having prepositioning means comprising:
- a prepositioning camera (6) adapted to form a two-dimensional image (61) of the terminal in a plane (P₃) perpendicular to the axis of the field (ZZ') of the prepositioning camera, and to determine characteristic distance values (e₁, e₂) between predetermined points of the contour of the terminal (1),
- a prepositioning clamp (5) comprising two branches (51, 52) movable relative to each other along two opposite directions contained in a plane perpendicular to the cable axis at the gripping point (20), so that, by moving the branches (51, 52) of the prepositioning clamp in opposite directions, the cable (2) is rotated about its axis.
